# EUROPÄISCHE PATENTSCHRIFT

(11) **EP 0 879 132 B1**
(45) Veröffentlichungstag und Bekanntmachung des Hinweises auf die Patenterteilung: **24.10.2001**
(21) Anmeldenummer: 97901470.1
(22) Anmeldetag: 28.01.1997
(51) Int. Cl.: B29C 47/90

(54) **EXTRUSIONSANLAGE MIT EINER FORMGEBUNGSEINRICHTUNG**
EXTRUDER WITH A SHAPING DEVICE
INSTALLATION D'EXTRUSION A DISPOSITIF DE FORMAGE

(30) Priorität: 30.01.1996 AT 16496
(43) Veröffentlichungstag der Anmeldung: 25.11.1998
(73) Patentinhaber: Greiner Extrusionstechnik GmbH, 4550 Kremsmünster (AT)
(72) Erfinder: PÜRSTINGER, Franz, A-4050 Traun (AT); WEIERMAYER, Leopold, A-4553 Schlierbach (AT)
(74) Vertreter: Secklehner, Günter, Dr.
(86) Internationale Anmeldenummer: AT9700013
(87) Internationale Veröffentlichungsnummer: WO9727991

(56) Entgegenhaltungen:
- EP-A- 0 237 723
- DE-A- 2 214 543
- DE-A- 2 239 746
- DE-A- 19 504 981
- DE-B- 1 201 038
- US-A- 3 668 288
- PATENT ABSTRACTS OF JAPAN vol. 010, no. 281 (M-520), 25.September 1986 & JP 61 102228 A (MATSUSHITA ELECTRIC WORKS LTD), 20.Mai 1986,

## Beschreibung

Die Erfindung betrifft eine Extrusionsanlage mit einer Formgebungseinrichtung, wie sie im Oberbegriff des Anspruches 1 beschrieben ist.

Eine Vorrichtung zum Kalibrieren von stranggepreßten Profilen, insbesondere von stranggepreßten Hohlprofilen, aus thermoplastischem Kunststoff, ist aus der DE 22 39 746 A bekannt geworden, bei welcher in Abstand in Extrusionsrichtung hinter dem Extrusionswerkzeug bzw. Spritzkopf der Kunststoffschneckenstrangpresse eine Vakuumkalibriereinrichtung mit einer darin integrierten Kühleinrichtung angeordnet ist. Im Anschluß an die Vakuumkalibriervorrichtung ist ein von einem Kühlmittel durchflossener Unterdruckkalibertank vorgesehen, wobei die Vakuumkalibriereinrichtung so ausgelegt ist, daß in dieser lediglich die Aussenhaut und gegebenenfalls vorhandene äußere Profilpartien sowie Feinkonturen des zu kalibrierenden Profils in ihrer endgültigen Form ausgeformt werden. Die noch im Profil enthaltene Restwärme wird durch das Kühlmittel im Unterdruckkalibertank abgeführt. In der Vakuumkalibriereinrichtung sind einzelne Kalibrierblenden im Abstand hintereinander angeordnet, welche somit zwischen sich Hohlräume in Form von Vakuumschlitzen ausbilden, durch welche der extrudierte Gegenstand mit Hilfe des angelegten Vakuums an die Formflächen der einzelnen Kalibrierblenden angesaugt wird. Diese Kalibrierblenden sind in einem gemeinsamen Unterdruckgehäuse angeordnet, in das ein zentraler Vakuum-Anschluß einmündet. Bei der hier vorgeschlagenen Vorrichtung zum Kalibrieren konnte nicht in allen Anwendungsfällen eine einwandfreie Oberflächenqualität des extrudierten Gegenstandes sowie eine hohe Standzeit der Vorrichtung erzielt werden.

Eine weitere Formgebungseinrichtung für eine Extrusionslage ist aus der DE 22 10 657 B bekannt geworden, die ein Extrusionswerkzeug und eine dieser nachgeordnete Kalibriervorrichtung aufweist. Dabei ist die Kalibriervorrichtung lediglich durch ein einziges Kalibrierwerkzeug gebildet, wobei die Kalibriervorrichtung kühlbar ausgestaltet sein kann. Die aus dem einzigen Kalibrierwerkzeug bestehende Kalibriervorrichtung weist Formflächen zum Anlegen eines hindurchzuführenden Gegenstandes auf. Zwischen dem Extrusionswerkzeug und der Kalibriervorrichtung ist eine Unterdruckkammer vorgesehen, wobei der Abstand zwischen dem Extrusionswerkzeug und der Kalibriervorrichtung einige mm, aber auch cm, betragen kann. Der zwischen den einander zugewandten Stirnflächen des Extrusionswerkzeuges und dem in Extrusionsrichtung unmittelbar nachfolgenden Kalibrierwerkzeug ausgebildete Vakuumschlitz wird durch einen diesen Spalt überbrückenden und die Unterdruckkammer ausbildenden Bauteil gebildet, welcher an den beiden benachbarten Anlagenteilen, nämlich dem Extrusionswerkzeug und der Kalibriervorrichtung im Bereich deren äußeren Oberfläche angschlossen ist. Der Innenraum der Unterdruckkammer steht über einen Stutzen mit einer Unterdruckeinheit in Verbindung.

Es sind weiters noch Formgebungseinrichtungen bekannt, mit welchen die aus einer Extrusionsdüse austretenden plastischen Stränge von Profilen, insbesondere Hohlprofile oder Rohre, auf gewünschte Außen- und Innenabmessungen kalibriert und in den gewünschten Außenabmessungen eingefroren bzw. zur Erzielung der gewünschten Eigensteifigkeit auf die dafür vorgesehene Temperatur abgekühlt werden. Derartige Formgebungseinrichtungen sind aus dem Buch von Walter Michaeli "Extrusionswerkzeuge für Kunststoffe und Kautschuk" aus dem Carl Hanser Verlag, München/Wien, 2. völlig überarbeitete und erweiterte Auflage, veröffentlicht 1991, insbesondere Seiten 321 bis 329, bekannt. Auf Seite 323 ist eine Außenkalibrierung mit Vakuum gezeigt, bei der das aus dem Extrusionswerkzeug austretende Extrudat in Form eines Hohlprofils in einiger Distanz nach dem Austritt aus der Düsenlippe des Extrusionswerkzeuges in ein Kalibrierwerkzeug eingeführt wird, durch welches das Extrudat im Bereich seiner umlaufenden Außenfläche an den Formflächen des Kalibrierwerkzeuges anliegend hindurchgeführt wird. Die spielfreie Anlage der Oberfläche des Extrudates an den einzelnen Formflächen des Kalibrierwerkzeuges wird durch in den Formflächen angeordnete Luftdurchlässe, insbesondere Schlitze, erzielt, die über Versorgungsleitungen mit einer Vakuumquelle verbunden sind. Zur Abkühlung des Extrudates sind die Kalibrierwerkzeuge mit einem oder mehreren umlaufenden Kanälen für ein Temperiermittel versehen und das Vakuum kann in den einzelnen Luftdurchlässen bzw. Schlitzen mit zunehmendem Abstand von der Düsenlippe des Extrusionswerkzeuges zunehmen. Die Temperatur des Temperiermittels ist gegenüber der Massetemperatur des extrudierten Profils sehr gering und beträgt in etwa 20°C. An derartige sogenannte Trockenkaliber schließen sich dann meistens ein oder mehrere Kühlbäder an, in welchen die ausreichend steifen Profile, teilweise unter Vakuumbeaufschlagung bzw. Benetzung über Sprühdüsen oder das Hindurchführen durch Wasserbäder auf Raumtemperatur abgekühlt werden. In vielen Fällen kann mit derartigen Kalibrierwerkzeugen keine ausreichende Oberflächenqualität der hergestellten Extrudate über eine längere Standzeit der Formgebungseinrichtung erreicht werden.

Der vorliegenden Erfindung liegt die Aufgabe zugrunde, auch bei hohen Durchsatzleistungen eine einwandfreie, gleichbleibende Oberflächenqualität der hergestellten Extrudate, insbesondere von Fensterprofilen oder Rohren oder dgl., ohne Erhöhung des maschinentechnischen Aufwandes zu erzielen.

Diese Aufgabe der Erfindung wird durch die Merkmale im Anspruch 1, insbesondere dessen Kennzeichenteil gelöst. Der überraschende Vorteil dieser Lösung liegt darin, daß mit einer Verringerung des Aufwandes beim Bau und der Wartung der Kalibrierwerkzeuge gleichzeitig die Oberflächengüte erheblich erhöht werden kann, indem Luftdurchlässe bzw. Hohlräume zur Vakuumbeaufschlagung des Profils in den Kalibrierwerkzeugen vermieden werden. Nicht vorhersehbar und für den Fachmann völlig überraschend, können aber dadurch höhere Maßgenauigkeiten des Extrudates erreicht werden, da das Extrudat nach dem Austritt aus der Düsenlippe des Extrusionswerkzeuges nicht mehr den Umgebungsbedingungen ausgesetzt ist. Durch den unmittelbaren Übertritt des Extrudates vom Extrusionswerkzeug in die Kalibrierwerkzeuge wird auch ein Einsinken der äußeren Mantelflächen durch darunter bzw. innerhalb des Profils angeordnete Steg vermieden, da der äußere Luftdruck an der Außenoberfläche nicht direkt wirksam werden kann. Dies bewirkt aber eine in unvorhersehbarer Weise rasche Ausfällung von Gleitmittel bzw. eine Kondensierung von Gleitmittelresten, wie beispielsweise der den Rohmaterialien zugemischten Wachse oder dgl., die aufgrund der hohen Temperaturen in diesem Bereich noch flüssig sind. Damit wird die Standzeit derartiger Werkzeuge zwischen den einzelnen Reinigungsvorgängen ohne nachteilige Veränderung der Oberflächenqualität erheblich erhöht, da Verschmutzungen im Eintrittsbereich der Kalibrierwerkzeuge durch die Entfernung der überschüssigen Gleitmittel verhindert und Verschmutzungen in den Formflächen der einzelnen Kalibrierwerkzeuge durch den Wegfall von Luftdurchlässen im überwiegenden Bereich der Formflächen des Kalibrierwerkzeuges vermieden sind. Weiters können die Bearbeitungskosten - und vor allem auch das Volumen der Hohlräume zum Anlegen des Vakuums - herabgesetzt werden. Dadurch ist auch eine universelle Anpassung der in Extrusionsrichtung verlaufenden Breite, der als Vakuumschlitze dienenden Hohlräume in einfacher Weise möglich. Die Justierung der Breite dieser Hohlräume kann durch Verstellung einzelner Kalibrierwerkzeuge gegenüber dem Kalibriertisch manuell oder automatisch erfolgen.

Durch die Ausbildung nach Anspruch 2 kann zusätzlich zur Abdichtung gegenüber den äußeren Umgebungsbedingungen zumindest einer der Hohlräume unmittelbar mit Vakuum bzw. Unterdruck beaufschlagt und der Gegenstand sofort danach gekühlt wird. Dadurch können Gleitmittelreste, ausgefällte Zusatzstoffe sowie Wachse über das angelegte Vakuum bei Aufrechterhaltung ausreichender Temperaturen direkt abgezogen werden. Damit wird die Standzeit derartiger Werkzeuge zwischen den einzelnen Reinigungsvorgängen ohne nachteilige Veränderung der Oberflächenqualität erheblich erhöht, da Verschmutzungen im Eintrittsbereich der Kalibrierwerkzeuge durch die Entfernung der überschüssigen Gleitmittel verhindert und Verschmutzungen in den Formflächen der einzelnen Kalibrierwerkzeuge durch den Wegfall von Luftdurchlässen im überwiegenden Bereich der Formflächen des Kalibrierwerkzeuges vermieden sind.

Vorteilhaft ist eine Weiterbildung nach Anspruch 3, da eine Schlierenbildung durch die glatten durchgehenden Formflächen vermieden und der jeweils gewünschte Glanzeffekt an der Oberfläche des Gegenstandes einfach erreicht werden kann.

Vorteilhaft ist aber auch eine Weiterbildung nach Anspruch 4, da dadurch die Erhärtung, Ausformung und Glättung der Oberfläche des Gegenstandes durch die ruhige glatte Abkühlung und Führung des Gegenstandes sowie eine verbesserte Qualität und ein geringerer Spannungsaufbau in diesen erreicht werden kann.

Durch die weitere Ausgestaltung nach Anspruch 5 wird eine Evakuierung der einzelnen Hohlräume, gegebenenfalls auch mit unterschiedlichem Unterdruck, ermöglicht.

Die vorteilhafte Weiterbildung nach Anspruch 6 ermöglicht einen ständigen Längsausgleich durch die Relativbewegung eines Kalibrierwerkzeuges, bedingt durch unterschiedliche Extrusionsgeschwindigkeiten bzw. Extrusionstemperaturen, wodurch Fehler am Gegenstand bzw. in dessen Oberfläche zuverlässig ausgeschaltet werden können.

Durch die vorteilhafte Ausführungsvariante nach Anspruch 7 wird eine störungsfreie Abfuhr von Zusatzmitteln bzw. Gleitmitteln oder dgl., die nur bei höheren Temperaturen dünnflüssig sind, ermöglicht, ohne daß diese während des Absaugens stocken und so die Leitung verlegen können.

Eine verbesserte Oberflächengüte bzw. Qualität der Deckschicht kann durch die Anordnung nach Anspruch 8 erzielt werden, da auch an der Oberfläche des heißen noch plastischen Gegenstandes stärker anhaftende Reste von Gleit- bzw. Zusatzmittel einwandfrei entfernt und abgesaugt werden können.

Durch die Ausgestaltung nach Anspruch 9 können während dem Betrieb sich verändernde Temperaturen und die dadurch bedingten Wärmedehnungen ohne mechanische Nachjustierung der Extrusionsanlage ausgeglichen werden.

Eine einfache Anpassung an unterschiedliche Abstände der Hohlräume und ein in diesen Hohlräumen angelegtes unterschiedlich hohes Vakuum kann durch die Ausbildung der Dichtungsvorrichtung nach Anspruch 10 erzielt werden.

Durch die Ausbildung nach Anspruch 11 wird eine gleichmäßige Schrumpfung des Profils, unter Einhaltung der Maßgenauigkeit während der Abkühlung, ermöglicht.

Von Vorteil ist auch die Ausgestaltung nach Anspruch 12, da dadurch ein Einfallen, insbesondere von Vollprofilen oder Rohren, im Abkühlungsvorgang vermieden werden kann.

Die Maßhaltigkeit von kleinen - meist nicht sehr stabilen - Vorsprüngen bzw. Leisten, Nuten oder dgl. kann durch die Ausbildung nach Anspruch 13 verbessert werden.

Durch die Weiterbildung nach Anspruch 14 kann dem höheren Verformungswiderstand aufgrund der zunehmenden Abkühlung des Gegenstandes durch Anpassung des Vakuums trotzdem eine ausreichende Vorspannung des Profils in Richtung der Formflächen aufgezwungen werden.

Durch die Ausgestaltung nach Anspruch 15 kann in einfacher Weise die mit der abgesaugten Luft zur Herstellung eines Vakuums ausgeschiedenen, insbesondere flüssigen, Bestandteile abgetrennt werden, und es ist somit ein gleichzeitiges Abziehen mit der zum Aufbau des Vakuums erforderlich abzuziehenden Luft ein Abtransport von die Qualität der Profile vor allem im Oberflächenbereich behinderten Materialien möglich.

Partielle Unterkühlungen des Extrusionswerkzeuges können durch eine Ausbildung nach Anspruch 16 verhindert werden.

Durch die Weiterbildung nach Anspruch 17 kann eine nochmalige Zusatzverformung und Ausdehnung des plastischen Gegenstandes vor dem Einlaufen in das erste Kalibrierwerkzeug erreicht werden.

Durch die Temperatur des Temperiermittels gemäß Anspruch 18 wird ein rasches Einfrieren der Oberflächenschichten bzw. -lagen des Gegenstandes und damit eine gute Maßhaltigkeit erreicht.

Durch die vorteilhafte Ausbildung nach Anspruch 19 kann eine exakte Anpassung des Kalibrierwerkzeuges an die gewünschte Maßhaltigkeit erreicht werden.

Durch die Weiterbildung nach Anspruch 20 kann bedingt durch die länger werdenden Glättungswege bei höherer Steifigkeit des Profils, eine bessere Oberflächenqualität und Spannungsfreiheit des so hergestellten Gegenstandes erreicht werden.

Das Verhältnis der Länge der Formfläche gemäß Anspruch 21 ermöglicht trotz der hohen Schrumpfung in der ersten Phase der Abkühlung des Gegenstandes die Beibehaltung der gewünschten Außenabmessungen.

Weitere vorteilhafte Ausgestaltungen beschreiben die Ansprüche 22 und 23.

Die Erfindung wird im nachfolgenden anhand der in den Zeichnungen dargestellten Ausführungsbeispiele näher erläutert.

Es zeigen:
- Fig. 1: eine Extrusionsanlage mit einer erfindungsgemäßen Formgebungseinrichtung in Seitenansicht und vereinfachter, schematischer Darstellung;
- Fig. 2: die Formgebungseinrichtung gemäß der Erfindung in Stirnansicht, geschnitten, gemäß den Linien II - II in Fig. 1 und vereinfachter, schematischer Darstellung;
- Fig. 3: die Formgebungseinrichtung nach Fig. 2 in Seitensicht, geschnitten, gemäß den Linien III - III in Fig. 2;
- Fig. 4: eine weitere und gegebenenfalls für sich eigenständige Ausführungsform der Formgebungseinrichtung nach Fig. 3 in Seitenansicht, geschnitten und vereinfachter, schematischer Darstellung;
- Fig. 5: einen anderen und gegebenenfalls für sich eigenständigen, erfindungsgemäßen Übergangsbereich zwischen dem Extrusionswerkzeug und dem diesen unmittelbar nachgeordneten Kalibrierwerkzeug in Seitenansicht, geschnitten, vergrößertem Maßstab und schematisch, vereinfachter Darstellung;
- Fig. 6: einen weiteren und gegebenenfalls für sich eigenständigen, erfindungsgemäßen Übergangsbereich zwischen dem Extrusionswerkzeug und zwei dieser in Extrusionsrichtung nachgeordneten Kalibrierwerkzeugen einer anderen, erfindungsgemäßen Formgebungseinrichtung, in Seitenansicht geschnitten, vergrößertem Maßstab und schematisch, vereinfacht dargestellter Darstellung;
- Fig. 7: eine andere und gegebenenfalls für sich eigenständige Ausführungsvariante einer erfindungsgemäßen Formgebungseinrichtung mit in den Kalibrierwerkzeugen angeordneten Luftdurchlässen zum Anschluß an eine Vakuumquelle, in Seitenansicht, geschnitten;
- Fig. 8: eine weitere, gegebenenfalls für sich eigenständige Ausführungsform einer Formgebungseinrichtung nach Fig. 7 in Stirnansicht teilweise geschnitten, gemäß den Linien VIII - VIII.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Weiters können auch Einzelmerkmale aus den gezeigten unterschiedlichen Ausführungsbeispielen für sich eigenständige, erfindungsgemäße Lösungen darstellen.

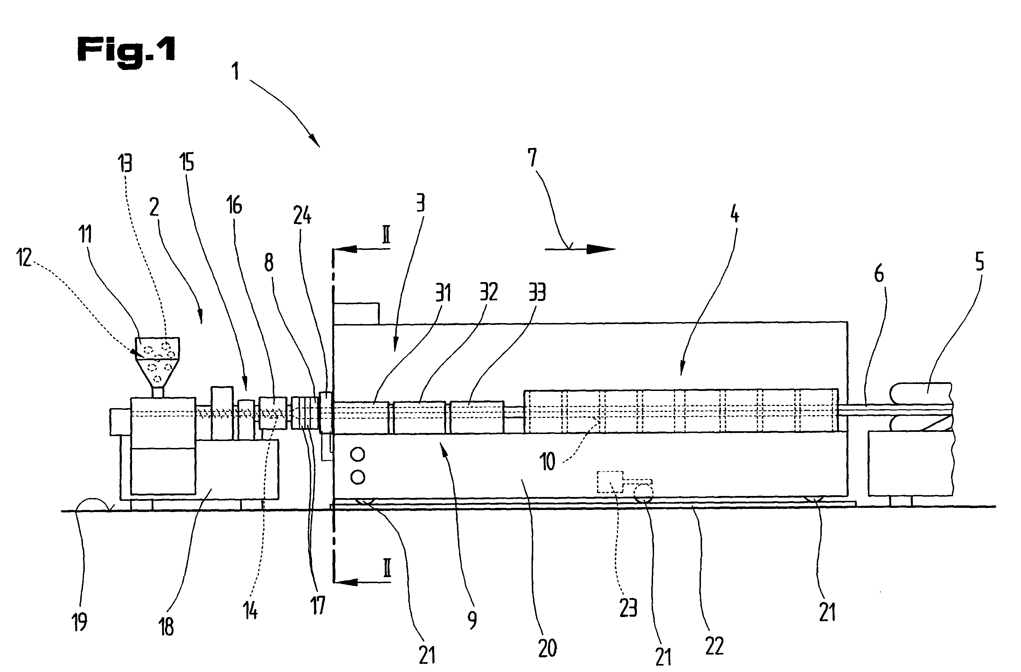

In der Fig. 1 ist eine Extrusionsanlage 1 gezeigt, die aus einem Extruder 2, einer diesem nachgeordneten Formgebungseinrichtung 3, einer dieser nachgeordneten Kühleinrichtung 4, welche gegebenenfalls auch eine Kalibriereinrichtung darstellen kann, sowie einem dieser nachgeordneten Raupenabzug 5 für einen extrudierten Gegenstand 6 besteht. Der Raupenabzug 5 dient dazu, um den Gegenstand 6, beispielsweise ein Profil aus Kunststoff für den Fensterbau, in Extrusionsrichtung - Pfeil 7 - ausgehend vom Extruder 2 durch die Formgebungseinrichtung 3 sowie Kühleinrichtung 4 abzuziehen. Die Formgebungseinrichtung 3 besteht bei diesem Ausführungsbeispiel aus einem Extrusionswerkzeug 8, einer Kalibriervorrichtung 9 und Kalibrierblenden 10 in der Kühleinrichtung 4. Die Kalibrierblenden 10 können aber auch lediglich als Stützblenden für den Gegenstand 6 dienen.

Im Bereich des Extruders 2 befindet sich ein Aufnahmebehälter 11, in welchem ein Material 12, wie beispielsweise ein Kunststoff 13, bevorratet ist, und mit einer Förderschnecke 14 dem Extruder 2 zugeführt wird. Weiters umfaßt der Extruder 2 noch eine Plastifiziereinheit 15, durch welche während des Durchtretens des Materials 12 durch diese mittels der Förderschnecke 14 sowie gegebenenfalls zusätzlicher Heizeinrichtungen 16 das Material 12 gemäß dem diesen innewohnenden Eigenschaften unter Druck und gegebenenfalls Zufuhr von Wärme erwärmt und plastifiziert und in Richtung des Extrusionswerkzeuges 8 gefördert wird. Vor dem Eintritt in das Extrusionswerkzeug 8 wird der Massestrom aus dem plastifizierten Material 12 in Übergangszonen 17 hin zum gewünschten Profilquerschnitt geführt.

Das Extrusionswerkzeug 8 mit der Plastifiziereinheit 15 und dem Aufnahmebehälter 11 sind auf einem Maschinenbett 18 abgestützt bzw. gehaltert, wobei das Maschinenbett 18 auf einer ebenen Aufstandsfläche 19, wie beispielsweise einem ebenen Hallenboden, aufgestellt ist.

Die Kalibriervorrichtung 9 mit der dieser nachgeordneten Kühleinrichtung 4 ist auf einem Kalibriertisch 20 angeordnet bzw. gehaltert, wobei sich der Kalibriertisch 20 über Laufrollen 21 auf einer auf der Aufstandsfläche 19 befestigten Fahrschiene 22 abstützt. Diese Lagerung des Kalibriertisches 20 über die Laufrollen 21 auf der Fahrschiene 22 dient dazu, um den gesamten Kalibriertisch 20 mit den darauf angeordneten Ein- bzw. Vorrichtungen in Extrusionsrichtung - Pfeil 7 - vom bzw. hin zum Extrusionswerkzeug 8 verfahren zu können. Um diese Verstellbewegung leichter und genauer durchführen zu können, ist beispielsweise einer der Laufrollen 21 ein Verfahrantrieb 23, wie schematisch in strichlierten Linien angedeutet, zugeordnet, der eine gezielte und gesteuerte Längsbewegung des Kalibriertisches 20 hin zum Extruder 2 oder vom Extruder 2 weg ermöglicht. Für den Antrieb und die Steuerung dieses Verfahrantriebes 23 können jegliche aus dem Stand der Technik bekannte Lösungen und Aggregate verwendet werden.

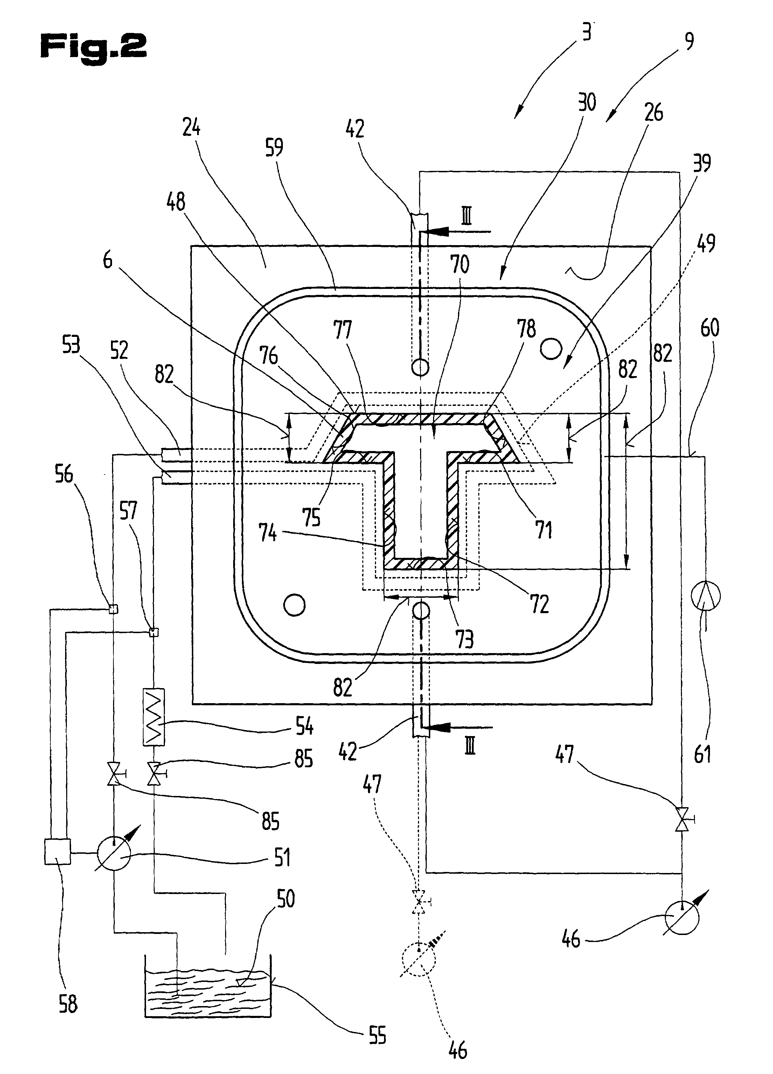

Wie in den Fig. 2 bis 4 gezeigt, ist bei diesem Ausführungsbeispiel dem Extrusionswerkzeug 8 ein Kalibrierwerkzeug 24 der Kalibriervorrichtung 9 unmittelbar nachgeordnet, wobei das Kalibrierwerkzeug 24 bevorzugt schwimmend, jedoch exakt achsgenau auf den dem Kalibrierwerkzeug 24 in Extrusionsrichtung - Pfeil 7 - nachgeordneten und später detaillierter beschriebenen Vorrichtungen bzw. Werkzeugen der Kalibriervorrichtung 9 gehaltert ist. Das Kalibrierwerkzeug 24 ist somit ein Bauteil der Kalibriervorrichtung 9 und weist senkrecht zur Extrusionsrichtung - Pfeil 7 - ausgerichtete Stirnflächen 25, 26 auf. Die Stirnfläche 25 ist dabei einer Düsenlippe 27 bzw. Stirnfläche des Extrusionswerkzeuges 8 zugewandt und mittels eines bevorzugt dichtenden Distanzelementes 28 in einer Distanz 29 von der Düsenlippe 27 angeordnet. Der Stirnfläche 26 des Kalibrierwerkzeuges 24, die vom Extrusionswerkzeug 8 abgewandt ist, ist über ein weiteres Distanzelement 30, das gleich groß oder auch unterschiedlich zur Distanz 29 zwischen der Stirnfläche 25 und der Düsenlippe 27 sein kann, eines der weiteren Kalibrierwerkzeuge 31 bis 33 der Kalibriervorrichtung 9 in Extrusionsrichtung - Pfeil 7 - nachgeordnet. Diese weiteren Kalibrierwerkzeuge 31 bis 33 sind in Extrusionsrichtung - Pfeil 7- jeweils in Abständen 34, 35 hintereinander angeordnet und am Kalibriertisch 20 gehaltert. Zwischen den einzelnen Kalibrierwerkzeugen 31 bis 33 sind bevorzugt als Dichtelemente ausgebildete Distanzelemente 36, 37 angeordnet.

Im Austrittsbereich des Kalibrierwerkzeuges 33 tritt der extrudierte Gegenstand 6 ohne größeren Zwischenraum in die Kühleinrichtung 4, welche gegebenenfalls auch als Kalibriereinrichtung dienen kann, ein und wird dort anschließend mit aus dem Stand der Technik bekannten Kühleinrichtungen abgekühlt. Dies kann entweder durch herkömmliche Wasserbäder bzw. Sprühbäder oder ähnliche, bekannte Einrichtungen erfolgen. Bevorzugt erfolgt in dieser Kühleinrichtung 4 eine Kalibrierung des Gegenstandes 6 mittels der in Fig. 1 im Bereich der Kühleinrichtung 4 angedeuteten Kalibrierblenden 10, wie diese aus dem Buch Michaelis bzw. anderen Druckschriften zum Stand der Technik, z.B. der DE 195 04 981 A1 sowie den EP 0 659 536 A2 und EP 0 659 537 A2, der US 3,473,194 A oder der DE 19 23 490 A, DE 22 39 746 A und der EP 0 487 778 B1 entnehmbar sind.

Durch die Verwendung der Distanzelemente 28 und 30, 36 und 37 werden zwischen dem Extrusionswerkzeug 8 und den einzelnen Kalibrierwerkzeugen 24 und 31 bis 33 um den Gegenstand 6 umlaufende Hohlräume 38 bis 41 geschaffen. Diese Hohlräume 38 bis 41 sind mit Leitungen 42 bis 45 verbunden, über welche diese Hohlräume 38 bis 41 auf einem unter dem Umgebungsdruck, also dem Luftdruck abgesenkten Unterdruck, evakuiert werden können. Dazu können die einzelnen Leitungen 42 bis 45 jeweils mit eigenen oder mit einem für alle Hohlräume 38 bis 41 gemeinsamen Vakuumerzeuger 46 verbunden sein. Im letztgenannten Fall, wenn ein gemeinsamer Vakuumerzeuger 46 für alle Hohlräume 38 bis 41 verwendet wird, können zwischen diesem und den einzelnen Hohlräumen 38 bis 41 Unterdruckregelorgane 47 angeordnet sein, sodaß beispielsweise die einzelnen Hohlräume 38 bis 41 mit zunehmenden Abstand von der Düsenlippe 27 auf ein höheres Vakuum evakuiert sind. Um während des Durchlaufens des Gegenstandes 6 durch die Kalibriervorrichtung 9 eine Verfestigung zumindest einer Oberfläche 48 des Gegenstandes 6 zu ermöglichen, sind die Kalibrierwerkzeuge 24 und 31 bis 33 gekühlt.

Dazu sind sie, wie am besten aus Fig. 2 ersichtlich, mit einem Kühlkanal 49 versehen, durch welchen ein Temperiermittel 50 hindurchgeführt werden kann. Das Temperiermittel 50 wird dazu mit einer Umwälzpumpe 51 dem Kühlkanal 49 über einen Einlaß 52 zugeführt. Das durch die Abkühlung des Gegenstandes 6 erwärmte Temperiermittel 50 tritt bei einem Auslaß 53 aus dem Kalibrierwerkzeug 24 wiederum aus. Das aus dem Auslaß 53 austretende Temperiermittel 50 kann in einen Wärmetauscher 54 - vor allem dann, wenn es sich um ein geschlossenes Temperiermittelsystem handelt - auf die gewünschte Temperatur abgekühlt und einem Tank 55 für das Temperiermittel 50 zugeführt werden. Die mit der Umwälzpumpe 51 durch den Kühlkanal 49 hindurchgeführte Menge an Temperiermittel 50 kann anhand von Meßwertgebern 56, 57, z.B. zur Ermittlung von Druck und/oder Temperatur des Temperiermittel 50 anhand der Temperaturdifferenz und/oder Druckdifferenz in der Zu- und Rückleitung für das Temperiermittel 50 erfolgen, wozu die Meßwertgeber 56, 57 über eine Steuervorrichtung 58 mit der Umwälzpumpe 51 verbunden sein können. Die Versorgung der weiteren Kalibrierwerkzeuge 31 bis 33 mit Temperiermittel 50 ist über die zentrale Umwälzpumpe 51 möglich bzw. kann auch für jedes der Kalibrierwerkzeuge 24, 31 bis 33 eine eigene Umwälzpumpe 51 mit einem geschlossenen oder offenen Umlaufsystem für das Temperiermittel 50 angeordnet sein. Für den Fall, daß nur eine zentrale Umwälzpumpe 51 vorgesehen ist, wird anhand der nachfolgenden Darstellungen die Verbindung der einzelnen Kühlkanäle 49 durch die Hohlräume 38 bis 41 hindurch gezeigt werden. Dabei kann die Temperatur des Temperiermittels 50 geringer 40°C, jedoch bevorzugt 20°C, betragen.

Insbesondere aus der Darstellung in Fig. 2 ist das Distanzelement 30, welches den Hohlraum 39 um den Gegenstand 6 gegenüber der Umgebungsluft bzw. Außenluft abdichtet, gezeigt. Dieses Distanzelement 30 ist im vorliegenden Fall durch ein aufblasbares Hohldichtungsprofil 59 mit einer Hohlkammer gebildet. Deshalb steht die Hohlkammer dieses Hohldichtungsprofils 59 über eine Druckleitung 60 mit einem Druckversorgungssystem 61, wie z.B. einer Druckluftquelle, einem unter Druck stehendem Fluid, wie z.B. Wasser, Öl oder andere, bevorzugt inkompressible Medien, in Verbindung, welches auch bei dem im Hohlraum 39 herrschenden Unterdruck eine luftdichte Abdichtung bei schwankender Distanz 29 sicherstellt. Diese Distanzänderungen können durch die aufgrund von Temperaturänderungen auftretenden Wärmedehnungen des Materials der Kalibrierwerkzeuge 24, 31 bis 33 sowie durch unterschiedliche Druckverhältnisse im Bereich der einzelnen Hohlräume 38 bis 41 bedingt sein. Die einzelnen Distanzelemente 30, 36, 37 bzw. das Hohldichtungsprofil 59 bilden eine umlaufende Dichtungsvorrichtung im Bereich der Hohlräume 38 bis 41 zwischen dem Gegenstand 6 und der Außenluft bzw. Umgebungsluft aus, welche bevorzugt schlecht wärmeleitend und/oder elastisch verformbar ausgebildet sind.

Selbstverständlich kann auch das Distanzelement 30 durch eine verschweißte Hohlkammerdichtung oder durch eine Dichtung aus Vollmaterial, wie beispielsweise Moosgummi oder Polyurethan oder dgl., gebildet sein. Der aus dem in Extrusionsrichtung - Pfeil 7 - letzten Kalibrierwerkzeug 33 austretende Gegenstand 6 kann dann entweder unmittelbar, gegebenenfalls durch Abdichtung gegenüber der Umgebungsluft, wie zwischen den einzelnen Kalibrierwerkzeugen 24, 31 bis 33 durch eine Stirnwand 62 in die Kühleinrichtung 4 eintreten oder diese kann in einem voreinstellbaren Längsabstand 63 in Extrusionsrichtung - Pfeil 7 - gesehen hinter dem letzten Kalibrierwerkzeug 33 angeordnet sein.

Während die Kalibrierwerkzeuge 31 bis 33 auf dem Kalibriertisch 20 oder auf diesen angeordneten Stützorganen der Höhe und der Seite nach aufeinander ausgerichtet und bezogen auf eine Mittellängsachse 64 des Gegenstandes 6 zentriert angeordnet sind, ist im vorliegenden Fall das Kalibrierwerkzeug 24 auf über das Kalibrierwerkzeug 31 in Richtung des Kalibrierwerkzeuges 24 vorragenden, auf die Mittellängsachse 64 des Gegenstandes 6 ausgerichteten Führungssäulen 65, 66 in Extrusionsrichtung - Pfeil 7 - verschiebbar angeordnet. Das derart in Extrusionsrichtung - Pfeil 7 - schwimmend auf den Führungssäulen 65, 66 angeordnete Kalibrierwerkzeug 24 kann dann durch Verschieben des Kalibriertisches 20 entlang der Fahrschiene 22 in Richtung auf den Extruder 2 positioniert werden, sodaß über die Distanzelemente 28, 30 ein dichtender Abschluß der Hohlräume 38, 39 gegenüber der Umgebungsluft erzielt wird. Bei der Halterung des Kalibrierwerkzeuges 24 am Kalibrierwerkzeug 31 ist auch darauf zu achten, daß dieses in Bezug zum Kalibrierwerkzeug 31 zumindest axial beweglich gelagert ist. Die einzelnen Hohlräume 38 bis 41 können auch als Schlitze bzw. Luftdurchlässe bezeichnet werden, welche bei diesen Ausführungsbeispielen als Vakuumschlitze für die Formgebung des Gegenstandes 6 dienen.

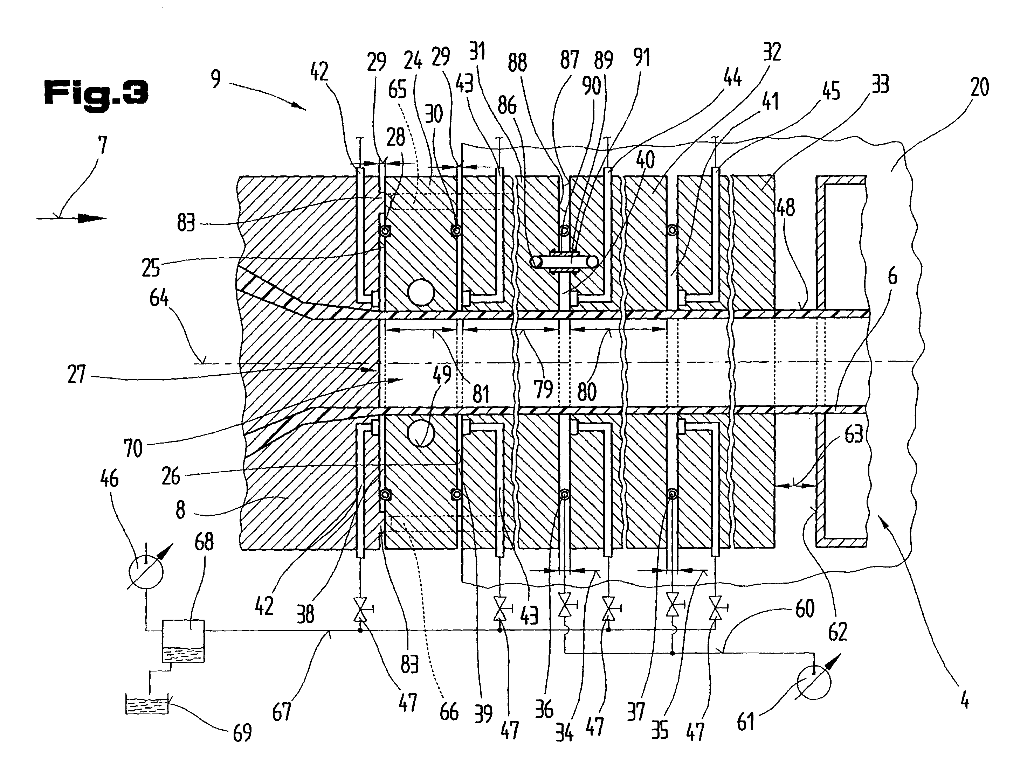

Wie weiters insbesondere aus der Fig. 3 ersichtlich und in dieser schematisch angedeutet ist, kann zwischen einer Ansaugleitung 67 vom Hohlraum 38 bzw. der Leitung 42 zum Vakuumerzeuger 46 ein Abscheider 68 mit einem diesen nachgeordneten Auffangbehälter 69 zwischengeschaltet sein. Dadurch, daß unmittelbar anschließend an die Düsenlippe 27 ein unter Unterdruck stehender Hohlraum 38 vorgesehen ist, wird der aus der Düsenlippe 27 austretende Gegenstand 6, insbesondere ein Hohlprofil, durch den im Inneren des Hohlprofils anliegenden Druck der Umgebungsluft, also dem Luftdruck, aufgebläht und unter der endgültigen Formgebung in eine Kalibrierkammer 70, welche durch Formflächen 71 bis 78 - Fig. 2 - gebildet ist und zur Profilierung und Kalibrierung der Oberfläche 48 des Gegenstandes 6 dienen, verbracht. Bei diesem zusätzlichen Quetschvorgang, in welchem das Material 12 des Gegenstandes 6 zur Anlage noch im wesentlichen seine Extrusionstemperatur aufweist, werden in dem Material 12 enthaltene Gleitmittelreste ausgepreßt bzw. ausgeschwemmt.

Diese Gleitmittelreste haben sich bisher in den Spalten bzw. Vakuumschlitzen in den Kalibrierwerkzeugen 24, 31 bis 33 abgelagert und führten zu einer Schlierenbildung im Bereich der Oberfläche 48 des Gegenstandes 6.

Dadurch, daß diese nun in heißer, flüssiger Form, insbesondere im Hohlraum 38 und gegebenenfalls auch im Hohlraum 39, ausgefällt bzw. ausgepreßt werden, können sie gleichzeitig mit der Absaugung der Luft zur Aufrechterhaltung des Vakuums in den Hohlräumen 38, 39 abgesaugt, im Abscheider 68 von der durch den Vakuumerzeuger 46 angesaugten Luft abgeschieden und in einem Auffangbehälter 69 zur Entsorgung bzw. Wiederaufbereitung aufgefangen werden.

Dabei erweist es sich als vorteilhaft, wenn die Leitung 42 vom Hohlraum 38 zur Ansaugleitung 67 im Extrusionswerkzeug 8, welches beheizt und auf hoher Temperatur gehalten ist, geführt wird, da dann die abgesaugten Restbestände nicht kondensieren bzw. erstarren und somit einwandfrei abgesaugt werden können. Es ist zwar auch möglich, die Leitung 43, wie im Bereich des Kalibrierwerkzeuges 31 gezeigt, in diesem zu führen, jedoch empfiehlt es sich dann, gegebenenfalls um eine zu starke Abkühlung der abzusaugenden Bestandteile aufgrund der Kühlung des Kalibrierwerkzeuges 31 mit dem Temperiermittel 50, die Leitung 43 gegebenenfalls gegenüber dem Kalibrierwerkzeug 31 mit einer Wärmeisolierung zu versehen oder mit einer eingelegten Heizspirale gesondert zu beheizen.

Der Verfahrensablauf zur Herstellung eines Gegenstandes bzw. dessen Kalibrierung in unmittelbaren Anschluß an die Düsenlippe 27 ist nun wie folgt:

Das im Extruder 2 plastifizierte meist pulver- oder kornförmige Material 12 wird durch die Quetsch- und Schervorgänge im Bereich der Extruderschnecken des Extruders 2 unter gleichzeitiger Zufuhr von Wärmeenergie plastifiziert und über verschiedene Umlenkungsverteilkanäle sowie Misch- und Temperierzonen der Düsenlippe 27 in einer der Querschnittsform des herzustellenden Gegenstandes 6 grob angepaßten Form in den Bereich der Düsenlippe 27 verbracht und in dieser auf die gewünschte Querschnittsform des Gegenstandes 6 geformt. Dabei ist eine von den Stirnkanten der äußeren Formflächen des Extrusionswerkzeuges 8 umhüllte Querschnittfläche der Düsenlippe 27 so bemessen, daß diese kleiner ist als eine von den Formflächen 71 bis 78 des dem Extrusionswerkzeug 8 unmittelbar nachgeordneten Kalibrierwerkzeuges 24 umhüllte Querschnittsfläche im Eintrittsbereich des Kalibrierwerkzeuges 24. Eine während der Abkühlung auftretende Schrumpfung des Gegenstandes 6 ist bei der Festlegung der einzelnen Querschnittsflächen ausgehend von der Düsenlippe 27 bis hin zum Austrittsbereich aus der Kalibriervorrichtung 9 ebenfalls zu berücksichtigen.

Der aus der Düsenlippe 27 austretende plastifizierte und keinerlei Eigensteifigkeit aufweisende Formstrang des Gegenstandes 6, insbesondere bei Hohlprofilen, tritt in den Hohlraum 38 ein und wird dort dem hier anliegenden Vakuum, welches mit dem Vakuumerzeuger 46 aufgebaut wird, ausgesetzt und aufgrund der Druckwirkung der Luft im Inneren des Hohlprofils, also dem normalen äußeren Luftdruck gegenüber dem Unterdruck im Hohlraum 38 üblicherweise um ein Maß von 0,1 mm bis 0,4 mm aufgebläht. Anschließend daran läuft dieser aufgeweitete Strang in die Kalibrierkammer 70 des ersten Kalibrierwerkzeuges 24 ein. Durch den Materialeinzug beim Einlaufen in die Kalibrierkammer 70 und den dabei erzielten Formvorgang bzw. die im Zuge der letzten Formgebung vor dem Austreten des Materialstrangs aus der Düsenlippe 27 an der Oberfläche des zu formenden Gegenstandes 6 abgelagerten Gleit- und Zusatzmittel werden durch das im Hohlraum 38 anliegende Vakuum mit der abgesaugten Luft durch die im geheizten Extrusionswerkzeug 8 angeordnete Leitung 42 der Ansaugleitung 67 zugeführt, von wo sie in den Abscheider 68 gelangen.

Unmittelbar nach dem Einlauf in die Kalibrierkammer 70 wird der Gegenstand 6 im Bereich seiner Oberfläche 48 mittels der glatten durchgehenden Formflächen 71 bis 78 geglättet und durch die niedere Temperatur der Formflächen 71 bis 78 durch die Kühlung mit dem Temperiermittel 50 in der gewünschten Querschnittsform durch Abkühlung des Materials in Richtung der Erstarrungs- bzw. der Gasungstemperatur stabilisiert. Beim Durchschreiten des an das Kalibrierwerkzeug 24 anschließenden Hohlraumes 39 werden durch den vom Inneren des Gegenstandes 6 bei dem Hohlprofil ausgeübten Überdruck die noch nicht ausreichend erstarrten Aussenflächen bzw. Oberflächen 48 des Gegenstandes 6 nach außen gedrückt, um somit durch die bereits einsetzende Abkühlung entstehende Zugspannungen durch im Gegenstand 6 innenliegende Stege oder dgl. aufzuheben bzw. zu beseitigen. Danach läuft das Profil in dieser nunmehr endgültigen gewünschten Außenform über eine längere Wegstrecke 79 entlang von glatten durchgehenden und ohne Öffnungen oder Vertiefungen versehenen Formflächen 71 bis 78 zum nächsten Hohlraum 40 durch. Im Zuge dieses ruhigen unbeeinflußten Durchlaufes wird nun die Oberfläche 48 des Gegenstandes 6, bedingt durch die Abkühlung des Kalibrierwerkzeuges 31 mit dem Temperiermittel 50, sehr stark abgekühlt, sodaß es zumindest in den obersten Randzonen seines Querschnitts tragfähig wird. Nach einer nochmaligen Dehnung des Gegenstandes 6 beim Durchlaufen des Hohlraumes 40 durchläuft der Gegenstand 6 nochmals die Formflächen 71 bis 78 des Kalibrierwerkzeuges 32 und somit eine Wegstrecke 80, die in etwa der Wegstrecke 79 entspricht. Danach kann der insoweit im Bereich seiner Oberflächenschicht versteifte Gegenstand 6 der nachfolgenden Kühleinrichtung 4 oder über einen weiteren Hohlraum 41, in welchem das Profil nochmals einem Unterdruck ausgesetzt wird, und ein weiteres Kalibrierwerkzeug 33 dieser Kühlvorrichtung 4 zugeführt werden. Die einzelnen Wegstrecken 79 bis 81, welche der durch die Kalibrierwerkzeuge 24, 31 bis 33 hindurchtretende Gegenstand 6 zurücklegt, entsprechen auch den einzelnen Längen der Kalibrierwerkzeuge 24, 31 bis 33 und somit auch der einzelnen Formflächen 71 bis 78.

Für das Herstellen einer einwandfreien Oberfläche solcher Gegenstände 6 hat es sich als vorteilhaft erwiesen, wenn die Wegstrecken 79, 80, also somit die Länge der Formflächen 71 bis 78, zumindest der Kalibrierwerkzeuge 31 bis 33 ca. 200 mm beträgt. Eine Wegstrecke 81 und somit eine Länge der Formflächen 71 bis 78 des Kalibrierwerkzeuges 24 kann dagegen nur einen Bruchteil, z.B. zwischen 10 % und 50 % der Wegstrecke 79, 80 der Kalibrierwerkzeuge 31 bis 33 betragen. Bevorzugt ist eine Wegstrecke 81 für das Kalibrierwerkzeug 24 zwischen 20 mm und 70 mm, z.B. 30 mm, und eine Wegstrecke 79, 80 für die Kalibrierwerkzeuge 31 bis 33 zwischen 200 mm und 250 mm, bevorzugt 235 mm.

Je nach der Wandstärke des Gegenstandes 6 bzw. der geforderten Spannungsfreiheit können zwei oder noch mehrere Kalibrierwerkzeuge 31 bis 33 in Extrusionsrichtung hintereinander zur Kalibrierung eines Gegenstandes 6 angeordnet sein.

Um dem Schwund des Gegenstandes 6 während der kontinuierlichen Hindurchbewegung durch die Kalibriervorrichtung 9 Rechnung zu tragen, kann eine Distanz 82 zwischen einander gegenüberliegenden Formflächen 77 und 73 bzw. 75 und 77 bzw. 71 und 77 oder der Formflächen 72 und 74 oder 76 und 78 mit zunehmendem Abstand der Kalibrierwerkzeuge 24 und 31 bis 33 vom Extrusionswerkzeug 8 kleiner sein.

Um in den verschiedenen Hohlräumen 38 bis 41 eine Mindestdistanz 29 bzw. einen minimalen Abstand 34, 35 einzuhalten, kann es sich vor allem bei in Extrusionsrichtung - Pfeil 7 - elastisch verformbaren Distanzelementen 28, 30, insbesondere bei aufblasbaren Dichtungsvorrichtungen oder Dichtungsvorrichtungen aus Elastomeren als vorteilhaft erweisen, Endanschläge 83 vorzusehen, die minimale Distanzen bzw. Abstände sicherstellen.

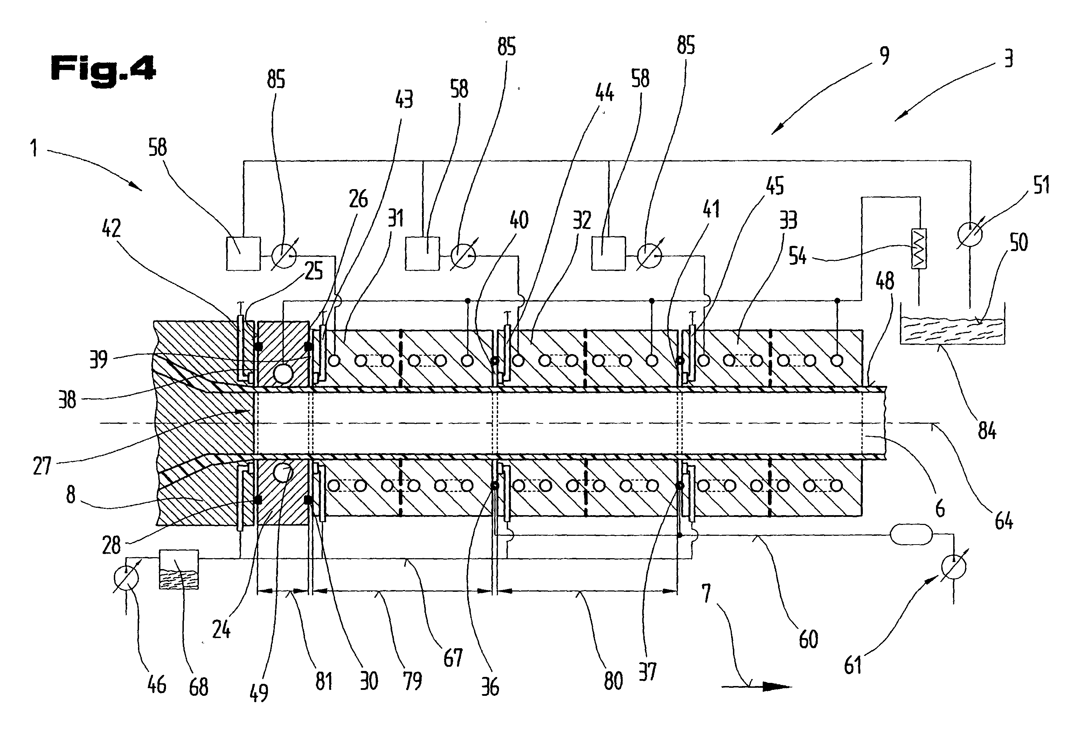

In der Fig. 4 ist eine Anordnungsvariante gezeigt, bei der jedes der einzelnen Kalibrierwerkzeuge 24 und 31 bis 33 mit einer eigenen Kühlmittelversorgung, also einem eigenen Tank 84 und einer Umwälzpumpe 51, verbunden ist. Die Steuerung der Temperiermittelzufuhr zu den einzelnen Kalibrierwerkzeugen 24, 31 bis 33 erfolgt anhand einer Steuervorrichtung 58 über Steuerventile 85 bzw. eigene Zwischenpumpen.

Des weiteren ist aus dieser Darstellung ersichtlich, daß der Unterdruck in den beiden Hohlräumen 38, 39 zwischen dem Extrusionswerkzeug 8 und dem in Extrusionsrichtung - Pfeil 7 - diesen unmittelbar nachgeordneten Kalibrierwerkzeug 24 bzw. zwischen diesem und dem nächstfolgenden Kalibrierwerkzeug 31 über einen eigenen Vakuumerzeuger 46, dem ein Abscheider 68 vorgeordnet ist, aufgebaut wird. Damit können aus diesen Bereichen auch, wie bereits anhand der Fig. 1 bis 3 beschrieben, ausfallende Gleitmittel und Zusatzmittel aus dem Oberflächenbereich des Werkstückes 6 abgeführt werden. Wie dieser Darstellung deutlich zu entnehmen ist, ist eine Wegstrecke 81 des Kalibrierwerkzeuges 24 bzw. der Formflächen 71 bis 78 kleiner 70 %, bevorzugt kleiner 30 %, der Länge der Wegstrecken 79, 80 der Kalibrierwerkzeuge 31 bis 33 bzw. deren Formflächen 71 bis 78. In verschiedenen Anwendungsfällen kann es sich sogar als vorteilhaft erweisen, wenn die Wegstrecke 81 des Kalibrierwerkzeuges 24 nur etwa 15 % der Wegstrecken 79, 80 der Kalibrierwerkzeuge 31, 32 beträgt. Die Wegstrecken 79 bis 81 können aber auch bevorzugt ein mehrfaches, z.B. ein sieben- bis dreißigfaches, bevorzugt ein zwanzigfaches, der Distanz 29 bzw. des Abstandes 34, 35 betragen.

Eine bevorzugte Länge der Wegstrecke 81 beträgt 30 mm, während die Wegstrecken 79, 80 235 mm und die Distanz 29 und die Abstände 34, 35 in etwa zwischen 1 mm und 15 mm, bevorzugt 3 mm bis 6 mm, betragen. In diesem Zusammenhang kann es sich auch als vorteilhaft erweisen, wenn die Länge der Formflächen 71 bis 78 der Kalibrierwerkzeuge in Extrusionsrichtung - Pfeil 7 -, also die Wegstrecke 79 bis 81, mit zunehmendem Abstand des Kalibrierwerkzeuges 31 bis 33 vom Extrusionswerkzeug 8 zunimmt.

Wie beispielsweise schematisch auch in Fig. 3 gezeigt, ist es selbstverständlich möglich, daß das Temperiermittel 50 nicht nur durch ein Kalibrierwerkzeug 24, 31 bis 33 durchgeführt wird, sondern durch mehrere dieser Kalibrierwerkzeuge, wobei dann in einem der Kalibrierwerkzeuge 24, 31 bis 33 das Temperiermittel 50 eingespeist und in einem anderen Kalibrierwerkzeug 24, 31 bis 33 von diesem zu einem Wärmetauscher 54 und dem Tank 55 abgeführt wird. Die Weiterleitung des Temperiermittels 50 von einem Kalibrierwerkzeug zum anderen in Extrusionsrichtung - Pfeil 7 - kann dabei, wie in größerem Maßstab schematisch in Fig. 3 gezeigt, dadurch erfolgen, daß in einem Kühlkanal 86 Temperiermittel 50 über senkrecht zu den einander zugewandten Stirnflächen 87 und 88 der Kalibrierwerkzeuge 31, 32 konzentrisch ausgerichtete Bohrungen 89 übergeführt wird. Zur Abdichtung des Übergangs, sodaß dieser bei dichtender Weiterleitung des Temperiermittels 50 jederzeit eine Relativbewegung ermöglicht, sind die beiden Bohrungen 89 mit einer Übergangshülse 90 verbunden, die mit einem Preßsitz in die Bohrungen 89 bzw. Übergangsbohrungen mit größerem Durchmesser eingesetzt ist. Sollte der Preß- bzw. Paßsitz zu einer Dichtung aufgrund der Relativverschiebung im Hinblick auf Temperaturveränderungen zwischen den Kalibrierwerkzeugen 31, 32 nicht ausreichen, kann eine Abdichtung der Übergangshülse 90 in den einzelnen Kalibrierwerkzeugen 31, 32 auch noch über O-Ringe 91 oder dgl. erfolgen.

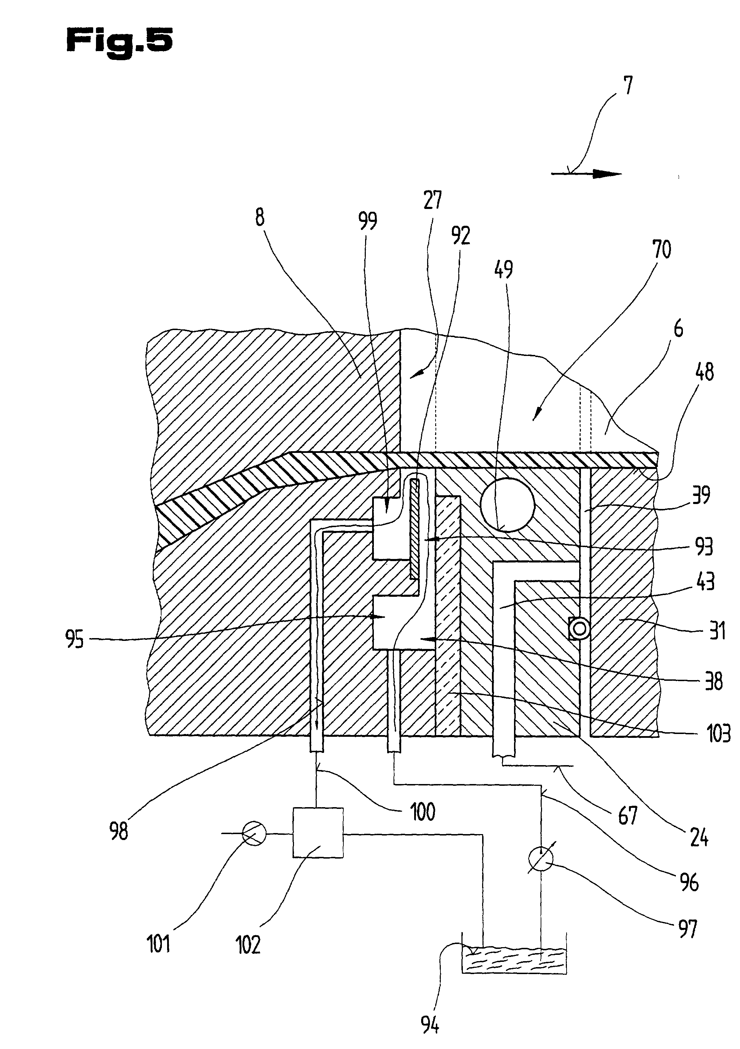

In Fig. 5 ist ein Teil des Übergangsbereiches zwischen dem Extrusionswerkzeug 8 und dem ersten diesem in Extrusionsrichtung - Pfeil 7 - nachgeordneten Kalibrierwerkzeug 24 in größerem Maßstab gezeigt. Zwischen dem Extrusionswerkzeug 8 und dem Kalibrierwerkzeug 24 ist ein Hohlraum 38 angeordnet. In diesen Hohlraum 38 ragt von Seiten des Extrusionswerkzeuges 8 eine Leitblende 92 vor. Zwischen dieser Leitblende 92 und dem Kalibrierwerkzeug 24 wird ein Zuströmkanal 93 für ein bevorzugt flüssiges Spülmittel 94 ausgebildet, der über einen Querkanal 95 bzw. Einlaß mit einer Förderleitung 96, die beispielsweise über eine Spülmittelpumpe 97 beaufschlagt wird, verbunden ist. Eine Saugleitung 98 im Extrusionswerkzeug 8 ist auf der dem Hohlraum 38 zugewandten Seite über eine Anschlußkaverne 99 mit dem Hohlraum 38 verbunden. Auf der vom Extrusionswerkzeug 8 abgewendeten Seite ist die Saugleitung 98 über eine Ansaugleitung 100 mit einer Vakuumpumpe 101 unter Zwischenschaltung einer Regeneriervorrichtung 102 für das Spülmittel 94 verbunden, in welcher die mit dem Spülmittel 94 abgespülten Reststoffe, wie Gleitmittel, Zusatzmittel oder dgl., die im Hohlraum 38 aus der Oberfläche 48 ausgepreßt bzw. ausgewaschen werden bzw. ausdiffundieren, abgeschieden werden. Die Spülmittelpumpe 97, die Vakuumpumpe 101 und die Regeneriervorrichtung 102 mit den diesen zugeordneten Förder- bzw. Ansaugleitungen 96, 100 stellen ein außerhalb der Formgebungseinrichtung 3 angeordnetes Versorgungssystem dar.

Selbstverständlich ist es auch möglich, bei der zuvor beschriebenen Ausführung jeden weiteren Hohlraum 39 bis 41 in der Form auszubilden, daß ein Entfernen von etwaigen Reststoffen, wie Gleit- und Zusatzmittel und dgl., von der Oberfläche 48 des Gegenstandes 6 ermöglicht wird.

Zusätzlich kann, wie schematisch angedeutet, der Zuströmkanal 93 durch ein Isolierelement 103 gegenüber dem Kalibrierwerkzeug 24 abgetrennt sein. Durch die Anordnung der Förderleitung 96 und des Querkanals 95 überwiegend in dem beheizten Extrusionswerkzeug 8 wird das über die Spülmittelpumpe 97 zugeführte Spülmittel 94 erwärmt und gelangt dort in den Bereich der Oberfläche 48 des kontinuierlich vorbeibewegten Gegenstandes 6 und kann bei ausreichendem Einströmdruck bzw. hoher Absaugleistung, die an der Oberfläche enthaltenen Gleitmittel und sonstigen Materialzusätze abspülen. Dabei ist bevorzugt die Durchströmrichtung des Spülmittels 94 entgegen der Extrusionsrichtung - Pfeil 7 - gewählt. Diese Emulsion aus den abgespülten Mitteln mit dem Spülmittel 94 kann gemeinsam mit der zur Ausformung des Gegenstandes 6 über die Vakuumpumpe 101 abgezogenen Luft zur Erzeugung eines Vakuums über die Ansaugleitung 100 ausgetragen und in einer Regeneriervorrichtung 102 abgeschieden werden. Dadurch, daß die Anschlußkaverne 99 und die Saugleitung 98 ebenfalls im beheizten Extrusionswerkzeug 8 angeordnet sind, können sich diese Gleitmittelzusätze und anderen Materialzusätze in den Leitungen nicht absetzen, sondern werden ordnungsgemäß ausgetragen.

Die Ausbildung der weiteren Hohlräume 39 bis 41 sowie deren mögliche Evakuierung über die Leitungen 43 bis 45 in Verbindung mit der Ansaugleitung 67 kann gemäß der Beschreibung in vorangegangenen Figuren erfolgen.

Durch eine entsprechende Formgebung der Düsenlippe 27 und der Kalibrierkammer 70 kann auch ein entsprechender Rückstau des Materials 12 für den Gegenstand 6 bzw. eine zusätzliche Quetschung des Materials im Hohlraum 38 zwingend vorgesehen werden, sodaß das Ausbringen der Gleitmittel und sonstiger Zusätze, die üblicher Weise an der Oberfläche 48 ausdiffundieren, verstärkt wird bzw. zwangsweise erfolgt. Es ist aber auch möglich, das Spülmittel 94 in gasförmiger Form einzusetzen und so ebenfalls die Abfuhr der Gleitmittel sowie Zusätze zu gewährleisten.

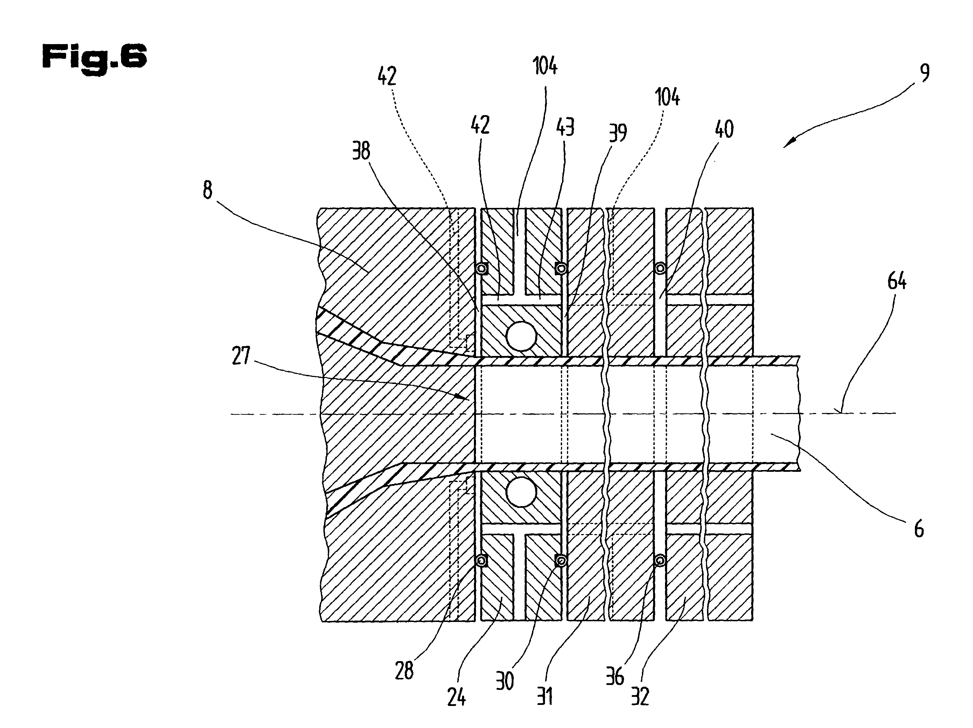

In Fig. 6 ist eine Ausführungsvariante einer Kalibriervorrichtung 9 gezeigt, bei der im Anschluß an das Extrusionswerkzeug 8 nur drei Kalibrierwerkzeuge 24, 31 und 32 angeordnet sind. Die Absaugleitung zur Herstellung eines Vakuums in dem Hohlraum 39 zwischen dem Kalibrierwerkzeug 24 und 31 ist in diesem Fall im Querschnittsbereich des Kalibrierwerkzeuges 24 angeordnet. Der Leitung 42 zur Herstellung eines Vakuums im Hohlraum 38 kann anstelle der Anordnung im Extrusionswerkzeug 8, wie mit strichlierten Linien gezeichnet, im Kalibrierwerkzeug 24 angeordnet sein, sodaß die Leitungen 42 und 43 über eine gemeinsame Absaugleitung 104 mit deren Vakuumerzeuger 46 verbunden ist, wie dies anhand der vorhergehenden Ausführungsbeispiele im Detail gezeigt und beschrieben worden ist.

Wird der Hohlraum 38 über die Leitung 42 im Extrusionswerkzeug 8 an einen Vakuumerzeuger 46 angeschlossen, ist es beispielsweise auch möglich, die beiden Hohlräume 39 und 40, die beidseits des Kalibrierwerkzeuges 31 angeordnet sind, über eine zentrale Absaugleitung 104, wie in strichlierten Linien dargestellt, unter Unterdruck zu setzen.

Dadurch ist es vor allem bei der Anordnung von mehreren hintereinander angeordneten Kalibrierwerkzeugen nur bei jedem zweiten erforderlich, entsprechende Anschlußkanäle für den Aufbau eines Vakuums in den Hohlräumen 38 bis 41 herzustellen.

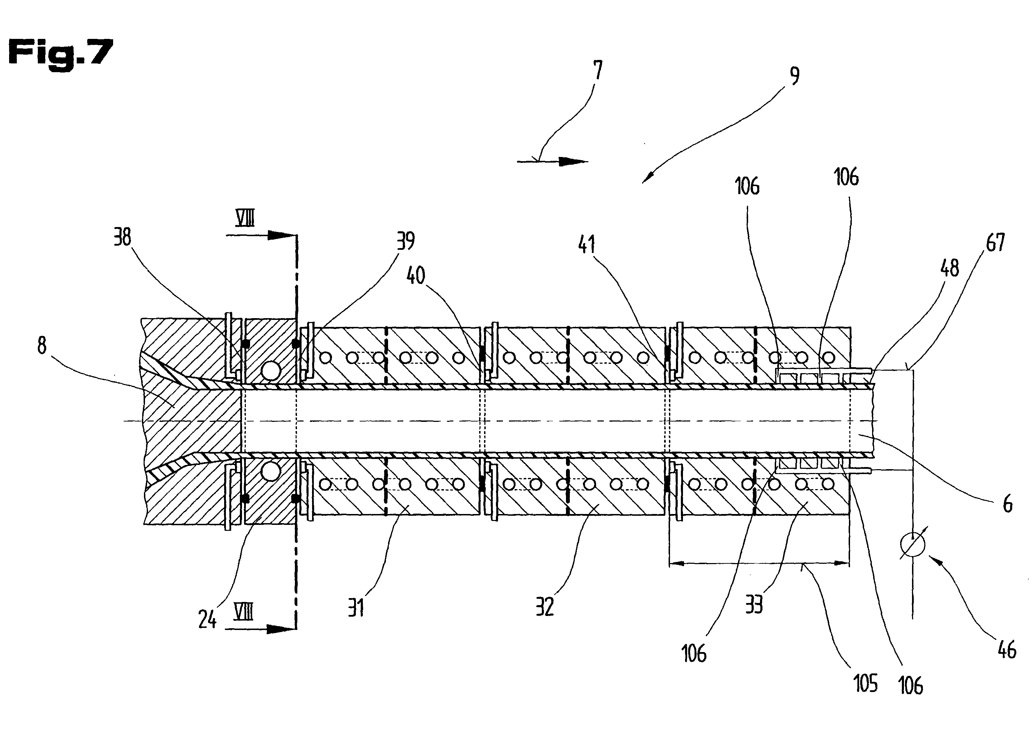

In Fig. 7 ist schematisch angedeutet, daß die Abdichtung der Hohlräume 38 bis 41 zwischen den Kalibrierwerkzeugen 24, 31 bis 33 durch starre Dichtungen, beispielsweise Kupfer- oder Keramikdichtungen erfolgen kann. Des weiteren ist in dieser Schemadarstellung gezeigt, daß in dem vom Extrusionswerkzeug 8 weitest entfernten Kalibrierwerkzeug 33 zumindest über einen Teil der Länge der Formflächen 71 bis 78 bzw. einer Wegstrecke 105 dieses Kalibrierwerkzeuges 33 Vakuumschlitze 106 bzw. Luftdurchlässe in Extrusionsrichtung - Pfeil 7 - hintereinander angeordnet sind. Die einzelnen Vakuumschlitze 106 bzw. Luftdurchlässe sind über eine Ansaugleitung 67 mit einem schematisch angedeutetem Vakuumerzeuger 46 verbunden. Eine derartige Ausgestaltung kann sich vor allem für Werkstücke empfehlen, die mit einer Mehrzahl von im Hohlraum liegenden Querstegen versehen sind, um zu vermeiden, daß das Werkstück nach dem Austreten aus dem letzten Kalibrierwerkzeug 33 unkontrolliert zusammengezogen wird und seine Maßhaltigkeit verliert.

Vorteilhaft ist hierbei, daß durch die Länge der vorangehenden glatten durchgehenden Formflächen 71 bis 78 in den Kalibrierwerkzeugen 24, 31 bis 33, und die weitgehende Abkühlung der Oberfläche 48 des Gegenstandes 6 kaum mehr Gleitmittelreste oder Zusatzmittel an der Oberfläche 48 des Gegenstandes 6 ausgeschieden werden, wodurch die Oberflächenqualität des Gegenstandes 6 in diesem Bereich nicht nachteilig beeinflußt werden kann und überdies ein Verlegen dieser Vakuumschlitze 106 durch derartige Lösungsmittelrückstände vermieden ist.

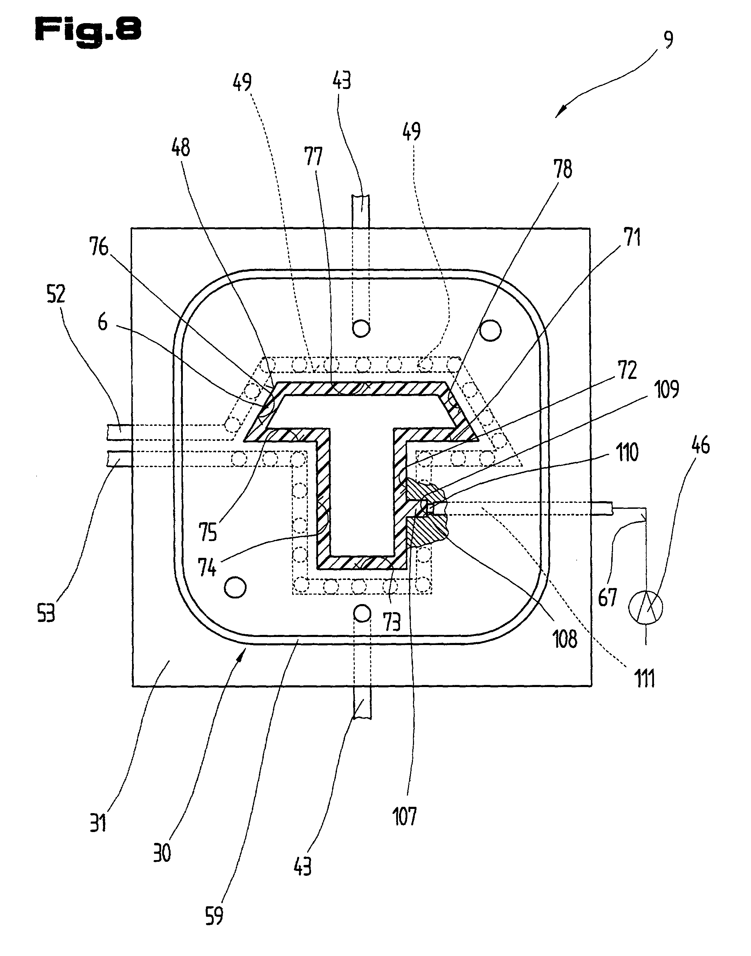

In Fig. 8 ist nochmals ein Kalibrierwerkzeug 31 der Kalibriereinrichtung 9 in Stirnansicht - ähnlich der Darstellung in Fig. 2 - gezeigt, weshalb für gleiche Teile die gleichen Bezugszeichen verwendet werden.

Das in Fig. 8 gezeigte Kalibrierwerkzeug 31 unterscheidet sich von dem in Fig. 2 gezeigten dadurch, daß für einen geringen Teil der Oberfläche 48, insbesondere im Bereich eines über die Außenumfangsfläche des Gegenstandes 6 vorspringenden Steges 107, insbesondere in einer dessen Stirnfläche 108 zugewandten Formfläche 109, ein Vakuumschlitz 110 bzw. Luftdurchlaß angeordnet ist, der über einen Anschlußkanal 111 bzw. einer Ansaugleitung 67 mit einem Vakuumerzeuger 46 verbunden sein kann. Dieser Vakuumschlitz 110 kann jetzt nur über einen Teilbereich der Wegstrecke 79 der Formflächen 71 bis 78 angeordnet sein oder es können in Längsrichtung der Wegstrecke 79 hintereinander mehrere solcher Vakuumschlitze 110 bzw. Luftdurchlässe angeordnet sein.

Es ist aber anstelle der gezeigten Anordnung, bei der der Vakuumschlitz 110 parallel zur Extrusionsrichtung - Pfeil 7 - verläuft, ebenso möglich, daß dieser Vakuumschlitz 110 oder mehrere in Extrusionsrichtung - Pfeil 7 - über die Formfläche 109 hintereinander angeordnete Vakuumschlitze 110 schräg zur Extrusionsrichtung - Pfeil 7 - verlaufen. Die Anordnung derartiger, geringfügiger Vakuumschlitze 110, vor allem im Bereich von instabilen, dünnen Vorsprüngen, ermöglicht auch im Bereich dieser dünnen Vorsprünge bzw. kleinen Nuten, die exakte Einhaltung der gewünschten Außenabmessungen und eine vollständige Ausformung dieser Außenbereiche des Gegenstandes 6. Nachdem der Anteil der Oberfläche derartiger Vorsprünge bzw. Nuten oder dgl. meist sehr gering, also unter 10 % der Gesamtoberfläche des Gegenstandes 6 bzw. der einzelnen Formflächen 71 bis 78 liegt, hat dieser auf die Qualität der Bearbeitung des Gegenstandes 6 über den Restbereich keinen nachteiligen Einfluß.

Bei dieser Ausführungsform erweist es sich auch als vorteilhaft, wenn die Kühlkanäle 49 parallel zur Extrusionsrichtung - Pfeil 7 - durch die Kalibrierwerkzeuge 31 bis 33 verlaufen. Vorteilhaft ist auch, wenn die Durchströmung des Temperiermittels 50 entgegen der Extrusionsrichtung - Pfeil 7 - erfolgt.

Selbstverständlich können die einzelnen, vorstehend beschriebenen Ausführungsbeispiele und die in diesen Ausführungsbeispielen gezeigten Varianten und unterschiedlichen Ausführungen jeweils für sich eigenständige, erfindungsgemäße Lösungen bilden und beliebig miteinander kombiniert werden. Dies betrifft bevorzugt die Anordnung des Kalibrierwerkzeuges 24 in Verbindung mit dem Extrusionswerkzeug 8 sowie der einzelnen Kalibrierwerkzeuge 31 bis 33 zueinander.

Vor allem können die einzelnen in den Fig. 1; 2, 3; 4; 5; 6; 7, 8 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Extrusionsanlage
- 2: Extruder
- 3: Formgebungseinrichtung
- 4: Kühleinrichtung
- 5: Raupenabzug

- 6: Gegenstand
- 7: Pfeil
- 8: Extrusionswerkzeug
- 9: Kalibriervorrichtung
- 10: Kalibrierblende

- 11: Aufnahmebehälter
- 12: Material
- 13: Kunststoff
- 14: Förderschnecke
- 15: Plastifiziereinheit

- 16: Heizeinrichtung
- 17: Übergangszone
- 18: Maschinenbett
- 19: Aufstandsfläche
- 20: Kalibriertisch

- 21: Laufrolle
- 22: Fahrschiene
- 23: Verfahrantrieb
- 24: Kalibrierwerkzeug
- 25: Stirnfläche

- 26: Stirnfläche
- 27: Düsenlippe
- 28: Distanzelement
- 29: Distanz
- 30: Distanzelement

- 31: Kalibrierwerkzeug
- 32: Kalibrierwerkzeug
- 33: Kalibrierwerkzeug
- 34: Abstand
- 35: Abstand

- 36: Distanzelement
- 37: Distanzelement
- 38: Hohlraum
- 39: Hohlraum
- 40: Hohlraum

- 41: Hohlraum
- 42: Leitung
- 43: Leitung
- 44: Leitung
- 45: Leitung

- 46: Vakuumerzeuger
- 47: Unterdruckregelorgan
- 48: Oberfläche
- 49: Kühlkanal
- 50: Temperiermittel

- 51: Umwälzpumpe
- 52: Einlaß
- 53: Auslaß
- 54: Wärmetauscher
- 55: Tank

- 56: Meßwertgeber
- 57: Meßwertgeber
- 58: Steuervorrichtung
- 59: Hohldichtungsprofil
- 60: Druckleitung

- 61: Druckversorgungssystem
- 62: Stirnwand
- 63: Längsabstand
- 64: Mittellängsachse
- 65: Führungssäule

- 66: Führungssäule
- 67: Ansaugleitung
- 68: Abscheider
- 69: Auffangbehälter
- 70: Kalibrierkammer

- 71: Formfläche
- 72: Formfläche
- 73: Formfläche
- 74: Formfläche
- 75: Formfläche

- 76: Formfläche
- 77: Formfläche
- 78: Formfläche
- 79: Wegstrecke
- 80: Wegstrecke

- 81: Wegstrecke
- 82: Distanz
- 83: Endanschlag
- 84: Tank
- 85: Steuerventil

- 86: Kühlkanal
- 87: Stirnfläche
- 88: Stirnfläche
- 89: Bohrung
- 90: Übergangshülse

- 91: O-Ring
- 92: Leitblende
- 93: Zuströmkanal
- 94: Spülmittel
- 95: Querkanal

- 96: Förderleitung
- 97: Spülmittelpumpe
- 98: Saugleitung
- 99: Anschlußkaverne
- 100: Ansaugleitung

- 101: Vakuumpumpe
- 102: Regeneriervorrichtung
- 103: Isolierelement
- 104: Absaugleitung
- 105: Wegstrecke

- 106: Vakuumschlitz
- 107: Steg
- 108: Stirnfläche
- 109: Formfläche
- 110: Vakuumschlitz

- 111: Anschlußkanal

## Patentansprüche

1. Extrusionsanlage (1) mit einer Formgebungseinrichtung (3), die zumindest eine einem Extrusionswerkzeug (8) in Extrusionsrichtung (7) nachgeordnete Kalibriervorrichtung (9) aus mehreren in Extrusionsrichtung (7) hintereinander angeordneten Kalibrierwerkzeugen (24, 31, 32, 33) mit Formflächen (71 bis 78) zum Anlegen eines hindurchzuführenden Gegenstandes (6) aufweist, wobei die Kalibriervorrichtung (9) und/oder die Kalibrierwerkzeuge (24, 31, 32, 33) mit Kühlkanälen zum Durchfluß einer Temperiermmittels versehen sind, und wobei benachbarte Kalibrierwerkzeuge (24, 31, 32, 33) zwischen ihren einander zugewandten Stirnflächen (26, 87, 88) Vakuum-Schlitze begrenzen, **dadurch gekennzeichnet, daß** in einem zwischen dem Extrusionswerkzeug (8) und dem in Extrusionsrichtung (7) unmittelbar nachfolgenden ersten Kalibrierwerkzeug (24) ausgebildeten Vakuum-Schlitz und/oder in mindestens dem Vakuum-Schlitz zwischen dem ersten Kalibrierwerkzeug (24) und mindestens einem weiteren Kalibrierwerkzeug (31, 32, 33) zur Ausbildung eines den hindurchzuführenden Gegenstand (6) im Bereich seiner äußeren Oberflächen (48) aufnehmenden Hohlraums (38 bis 41) als Distanzelement (28, 30, 36, 37) eine die Stirnkanten der Formflächen (71 bis 78) gegenüber dem Umgebungsdruck abschließende, räumlich verformbare Dichtungsvorrichtung angeordnet ist.

2. Extrusionsanlage nach Anspruch 1, **dadurch gekennzeichnet, daß** zumindest einer der den hindurchfließenden Gegenstand (6) umschließende Hohlräume (38 bis 41) auf einen gegenüber dem Umgebungsdruck abgesenkten Unterdruck evakuiert ist.

3. Extrusionsanlage nach Anspruch 1 oder 2, **dadurch gekennzeichnet, daß** ein überwiegender Teil der Formflächen (71 bis 78) von zumindest drei dem Extrusionswerkzeug (8) unmittelbar nachgeordneten Kalibrierwerkzeugen (24, 31 bis 33) durchgehend glatt ausgebildet ist.

4. Extrusionsanlage nach einem oder mehreren der vorhergehenden Ansprüche, **dadurch gekennzeichnet, daß** eine Länge der Formflächen (71 bis 78) jedes Kalibrierwerkzeuges (24, 31 bis 33) in Extrusionsrichtung - Pfeil (7) - ein mehrfaches, insbesondere ein sieben- bis dreißigfaches, z.B. ein zwanzigfaches, einer parallel zur Extrusionsrichtung - Pfeil (7) - verlaufenden Distanz (29) zwischen Düsenlippen (27) des Extrusionswerkzeuges (8) und dem diesen unmittelbar nachfolgenden Kalibrierwerkzeug (31) bzw. eines Abstandes (34, 35) zwischen zwei in Extrusionsrichtung - Pfeil (7) - unmittelbar hintereinander angeordneten Kalibrierwerkzeugen (31 bis 33) beträgt.

5. Extrusionsanlage nach einem oder mehreren der vorhergehenden Ansprüche, **dadurch gekennzeichnet, daß** jeder Hohlraum (38 bis 41) in einer senkrecht zur Extrusionsrichtung liegenden Querschnittsebene bzw. die in dieser Ebene den Formflächen (71 bis 78) der Kalibrierwerkzeuge (24, 31 bis 33) benachbarten Hohlräume (38 bis 41) mit einer eigenen Leitung (42 bis 45) verbunden sind.

6. Extrusionsanlage nach einem oder mehreren der vorhergehenden Ansprüche, **dadurch gekennzeichnet, daß** das der Düsenlippe (27) in Extrusionsrichtung - Pfeil (7) - unmittelbar nachgeordnete Kalibrierwerkzeug (24) auf dem diesen nachfolgenden Kalibrierwerkzeug (31) zumindest axial beweglich gelagert ist.

7. Extrusionsanlage nach einem oder mehreren der vorhergehenden Ansprüche, **dadurch gekennzeichnet, daß** die Leitung (42) für den dem Extrusionswerkzeug (8) unmittelbar nachgeordneten Hohlraum (38) zumindest teilweise im Extrusionswerkzeug (8) angeordnet ist.

8. Extrusionsanlage nach einem oder mehreren der vorhergehenden Ansprüche, **dadurch gekennzeichnet, daß** der Hohlraum (38 bis 41) bzw. der Schlitz mit einem Querkanal (95) bzw. einem Einlaß für ein Spülmittel (94) versehen ist, welcher über eine Förderleitung (96) mit einem außerhalb der Formgebungseinrichtung (3) angeordneten Versorgungssystem verbunden ist.

9. Extrusionsanlage nach einem oder mehreren der vorhergehenden Ansprüche, **dadurch gekennzeichnet, daß** die Dichtungsvorrichtung die Stirnkanten der Formflächen (71 bis 78) durchgehend umschließt.

10. Extrusionsanlage nach einem oder mehreren der vorhergehenden Ansprüche, **dadurch gekennzeichnet, daß** die Dichtungsvorrichtung mit einer Hohlkammer versehen ist, die gegebenenfalls über eine Druckleitung (60) mit einem Druckversorgungssystem (61) verbunden ist.

11. Extrusionsanlage nach einem oder mehreren der vorhergehenden Ansprüche, **dadurch gekennzeichnet, daß** eine Distanz (82) zwischen den einander gegenüberliegenden Formflächen (71 bis 78) der Kalibrierwerkzeuge (24, 31 bis 33) mit zunehmendem Abstand des Kalibrierwerkzeuges (24, 31 bis 33) vom Extrusionswerkzeug (8) kleiner wird.

12. Extrusionsanlage nach einem oder mehreren der vorhergehenden Ansprüche, **dadurch gekennzeichnet, daß** in den vom Extrusionswerkzeug (8) weitest entfernten Kalibrierwerkzeug (33) in dem in Extrusionsrichtung - Pfeil (7) - liegenden Endbereich der Formflächen (71 bis 78) Luftdurchlässe angeordnet sind, die über eine Ansaugleitung (67) mit dem Vakuumerzeuger (46) verbunden sind.

13. Extrusionsanlage nach einem oder mehreren der vorhergehenden Ansprüche, **dadurch gekennzeichnet, daß** in einem geringen Teilbereich einer Formfläche (71 bis 78), der kleiner ist als 10 % der gesamten Formfläche (71 bis 78) eines Kalibrierwerkzeuges (24, 31 bis 33), ein oder mehrere Luftdurchlässe angeordnet sind, die über eine Ansaugleitung (67) mit dem Vakuumerzeuger (46) verbunden sind.

14. Extrusionsanlage nach einem oder mehreren der vorhergehenden Ansprüche, **dadurch gekennzeichnet, daß** die Hohlräume (38 bis 41) zwischen den in Extrusionsrichtung - Pfeil (7) - hintereinander angeordneten Kalibrierwerkzeugen (24, 31 bis 33) über getrennte Ansaugleitungen (67) mit jeweils einem ein höheres Vakuum aufweisenden Vakuumerzeuger (46) verbunden sind.

15. Extrusionsanlage nach einem oder mehreren der vorhergehenden Ansprüche, **dadurch gekennzeichnet, daß** zwischen den Hohlräumen (38 bis 41) und dem Vakuumerzeuger (46) ein Abscheider (68) angeordnet ist.

16. Extrusionsanlage nach einem oder mehreren der vorhergehenden Ansprüche, **dadurch gekennzeichnet, daß** zwischen dem Extrusionswerkzeug (8) und dem in Extrusionsrichtung - Pfeil (7) - nachgeordneten ersten Kalibrierwerkzeug (24) eine schlecht wärmeleitende, vorzugsweise elastisch verformbare, Dichtungsvorrichtung angeordnet ist.

17. Extrusionsanlage nach einem oder mehreren der vorhergehenden Ansprüche, **dadurch gekennzeichnet, daß** eine Stirnfläche des Extrusionswerkzeuges (8) und eine Stirnfläche (25) des diesem unmittelbar nachgeordneten Kalibrierwerkzeuges (24) einander zugewandt, senkrecht zur Extrusionsrichtung - Pfeil (7) - ausgerichtet sowie voneinander distanziert angeordnet sind.

18. Extrusionsanlage nach einem oder mehreren der vorhergehenden Ansprüche, **dadurch gekennzeichnet, daß** das dem Extrusionswerkzeug (8) unmittelbar nachgeordnete Kalibrierwerkzeug (24) mit einem Temperiermittel (50) beschickt ist, dessen Temperatur geringer 40°C, bevorzugt 20°C, ist.

19. Extrusionsanlage nach einem oder mehreren der vorhergehenden Ansprüche, **dadurch gekennzeichnet, daß** eine in Extrusionsrichtung - Pfeil (7) - verlaufende Länge der Formflächen (71 bis 78) der einzelnen Kalibrierwerkzeuge (24, 31 bis 33) unterschiedlich ist.

20. Extrusionsanlage nach einem oder mehreren der vorhergehenden Ansprüche, **dadurch gekennzeichnet, daß** die Länge der Formflächen (71 bis 78) der Kalibrierwerkzeuge (24, 31 bis 33) mit zunehmendem Abstand des Kalibrierwerkzeuges (24, 31 bis 33) vom Extrusionswerkzeug (8) zunimmt.

21. Extrusionsanlage nach einem oder mehreren der vorhergehenden Ansprüche, **dadurch gekennzeichnet, daß** eine Länge der Formflächen (71 bis 78) des dem Extrusionswerkzeug (8) unmittelbar nachgeordneten Kalibrierwerkzeuges (24) kleiner 70 %, bevorzugt kleiner 30 %, der Länge der Formflächen (71 bis 78) des dem in Extrusionsrichtung - Pfeil (7) - diesem unmittelbar nachgeordneten Kalibrierwerkzeuges (31) ist.

22. Extrusionsanlage nach einem oder mehreren der vorhergehenden Ansprüche, **dadurch gekennzeichnet, daß** eine von den Formflächen (71 bis 78) des dem Extrusionswerkzeug (8) unmittelbar nachgeordneten Kalibrierwerkzeuges (24) umhüllte Querschnittsfläche im Eintrittsbereich des Kalibrierwerkzeuges (24) größer ist, als eine von den Stirnkanten der äußeren Formflächen (71 bis 78) des Extrusionswerkzeuges (8) umhüllte Querschnittsfläche.

23. Extrusionsanlage nach einem oder mehreren der vorhergehenden Ansprüche, **dadurch gekennzeichnet, daß** das dem Extrusionswerkzeug (8) unmittelbar nachgeordnete Kalibrierwerkzeug (24) auf dem diesen in Extrusionsrichtung - Pfeil (7) - nachgeordneten Extrusionswerkzeug (31) in in einer senkrecht zur Extrusionsöffnung verlaufenden Ebene verlaufenden Richtung, ausgerichtet gelagert und in einer in Extrusionsrichtung - Pfeil (7) - verlaufenden Richtung relativ verstellbar ausgebildet ist.

## Claims

1. Extruder (1) with a shaping device (3) having, downstream of an extrusion die (8) in the extrusion direction (7), at least one calibrating device (9) comprising several calibrating tools (24, 31, 32, 33) arranged one after the other in the extrusion direction (7) with shaping surfaces (71 to 78) that are applied against an object (6) as it is fed through, the calibrating device (9) and/or the calibrating tools (24, 31, 32, 33) being provided with cooling passages through which a tempering medium is circulated, and adjacent calibrating tools (24, 31, 32, 33) delimit vacuum slots between their oppositely facing end faces (26, 87, 88), **characterised in that**, in order to form a cavity (38 to 41) to receive the object (6) in the region of its external surfaces (48) as it is fed through, a three-dimensionally deformable sealing device closing off the end edges of the shaping surfaces (71 to 78) from the ambient pressure is provided in the form of a spacing element (28, 30, 36, 37) in a first vacuum slot between the extrusion die (8) and the first calibration tool (24) immediately after it in the extrusion direction (7) and/or in at least the vacuum slot between the first calibration tool (24) and at least another calibrating tool (31, 32, 33).

2. Extruder as claimed in claim 1, **characterised in that** at least one of the cavities (38 to 41) enclosing the through-flowing object (6) is evacuated to generate a vacuum pressure below ambient pressure.

3. Extruder as claimed in claim 1 or 2, **characterised in that** a predominant part of the shaping surfaces (71 to 78) of at least three calibrating tools (24, 31 to 33) disposed immediately after the extrusion die (8) is smooth end-to-end.

4. Extruder as claimed in one or more of the preceding claims, **characterised in that** a length of the shaping surfaces (71 to 78) of each calibrating tool (24, 31 to 33) in the extrusion direction - arrow (7) - is a multiple, in particular seven to thirty times, for example twenty times, that of a distance (29) parallel with the extrusion direction - arrow (7) - extending between nozzle lips (27) of the extrusion die (8) and the immediately adjacent calibrating tool (31) or a distance (34, 35) between two calibrating tools (31 to 33) disposed immediately one after another in the extrusion direction - arrow (7).

5. Extruder as claimed in one or more of the preceding claims, **characterised in that** each cavity (38 to 41) in a plane of cross section perpendicular to the extrusion direction and the cavities (38 to 41) adjacent to the shaping surfaces (71 to 78) of the calibrating tools (24, 31 to 33) in this plane are connected to a separate line (42 to 45).

6. Extruder as claimed in one or more of the preceding claims, **characterised in that** the calibrating tool (24) immediately adjacent to the nozzle lip (27) in the extrusion direction - arrow (7) - is mounted on the calibrating tool (31) adjacent thereto so as to be at least axially displaceable.

7. Extruder as claimed in one or more of the preceding claims, **characterised in that** the line (42) for the cavity (38) immediately adjacent to the extrusion die (8) is disposed at least partially in the extrusion die (8).

8. Extruder as claimed in one or more of the preceding claims, **characterised in that** the cavity (38 to 41) or slot is provided with a transverse passage (95) or an inlet for a rinsing agent (94), which is connected via a delivery line (96) to a supply system disposed externally to the shaping device (3).

9. Extruder as claimed in one or more of the preceding claims, **characterised in that** the sealing device encloses the end edges of the shaping surfaces (71 to 78) end to end.

10. Extruder as claimed in one or more of the preceding claims, **characterised in that** the sealing device is provided with a hollow compartment, which is optionally connected via a pressure line (60) to a pressure supply system (61).

11. Extruder as claimed in one or more of the preceding claims, **characterised in that** a distance (82) between the oppositely lying shaping surfaces (71 to 78) of the calibration tools (24, 31 to 33) is smaller the farther away the calibration tool (24, 31 to 33) is from the extrusion die (8).

12. Extruder as claimed in one or more of the preceding claims, **characterised in that** air inlets connected to the vacuum generator (46) by a suction line (67) are provided in the end region of the shaping surfaces (71 to 78) of the calibration tool (33) lying farthest away from the extrusion die (8) in the extrusion direction - arrow (7).

13. Extruder as claimed in one or more of the preceding claims, **characterised in that** one or more air inlets connected to the vacuum generator (46) by a suction line (67) are provided in a small part region of a shaping surface (71 to 78) which is smaller than 10% of the total shaping surface (71 to 78) of a calibrating tool (24, 31 to 33).

14. Extruder as claimed in one or more of the preceding claims, **characterised in that** the cavities (38 to 41) between the calibrating tools (24, 31 to 33) disposed one after another in the extrusion direction - arrow (7) - are respectively connected to a vacuum generator (46) of a higher vacuum by separate suction lines (67).

15. Extruder as claimed in one or more of the preceding claims, **characterised in that** a separator (68) is provided between the cavities (38 to 41) and the vacuum generator (46).

16. Extruder as claimed in one or more of the preceding claims, **characterised in that** a sealing device which is a poor heat conductor and preferably elastically deformable is provided between the extrusion die (8) and the first calibration tool (24) disposed immediately after in the extrusion direction - arrow (7).

17. Extruder as claimed in one or more of the preceding claims, **characterised in that** an end face of the extrusion die (8) and an end face (25) of the calibration tool (24) arranged immediately thereafter are aligned facing one another perpendicular to the extrusion direction - arrow (7) - and spaced at a distance apart.

18. Extruder as claimed in one or more of the preceding claims, **characterised in that** the tempering medium (50) is circulated to the calibrating tool (24) arranged immediately after the extrusion die (8), the temperature of which is preferably less than 40 °C, preferably 20 °C.

19. Extruder as claimed in one or more of the preceding claims, **characterised in that** a length of the shaping surfaces (71 to 78) of the individual calibrating tools (24, 31 to 33) extending in the extrusion direction - arrow (7) - varies.

20. Extruder as claimed in one or more of the preceding claims, **characterised in that** the length of the shaping surfaces (71 to 78) of the calibration tools (24, 31 to 33) increases, the greater the distance the calibrating tool (24, 31 to 33) is from the extrusion die (8).

21. Extruder as claimed in one or more of the preceding claims, **characterised in that** a length of the shaping surfaces (71 to 78) of the calibration tool (24) immediately adjacent to the extrusion die (8) is 70% smaller, preferably 30% smaller, than the length of the shaping surfaces (71 to 78) of the calibration tool (31) immediately after it in the extrusion direction - arrow (7).

22. Extruder as claimed in one or more of the preceding claims, **characterised in that**, in the inlet region of the calibrating tool (24), a surface area enclosed by the shaping surfaces (71 to 78) of the calibrating tool (24) is larger in cross section than a cross-section surface area enclosed by the end edges of the external shaping surfaces (71 to 78) of the extrusion die (8).

23. Extruder as claimed in one or more of the preceding claims, **characterised in that** the calibrating tool (24) immediately adjacent to the extrusion die (8) is designed so that it can be mounted on the extrusion die (31) immediately thereafter in the extrusion direction - arrow (7) - so as to be aligned in the direction of a plane perpendicular to the extrusion opening and relatively displaceable in a direction running in the extrusion direction - arrow (7).

## Revendications

1. Installation d'extrusion (1) avec un dispositif de formage (3) qui présente au moins un dispositif de calibrage (9) disposé en aval d'un outil d'extrusion (8) dans la direction d'extrusion (7), constituée de plusieurs outils de calibrage (24, 31, 32, 33) disposés les uns derrière les autres dans la direction d'extrusion (7) , avec des faces de formage (71 à 78) pour l'application d'un objet (6) à faire passer, où le dispositif de calibrage (9) et/ou les outils de calibrage (24, 31, 32, 33) sont pourvus de canaux de refroidissement pour le passage d'un agent tempérant, et où des outils de calibrage avoisinants (24, 31, 32, 33) délimitent entre leurs faces frontales (26, 87, 88) orientées les unes vers les autres des fentes à vide, **caractérisée en ce qu'**il est disposé dans une fente à vide ménagée entre l'outil d'extrusion (8) et le premier outil de calibrage (24) faisant directement suite dans la direction d'extrusion (7) et/ou dans au moins la fente à vide entre le premier outil de calibrage (24) et au moins un outil de calibrage additionnel (31, 32, 33), pour la réalisation d'un espace creux (38 à 41) recevant l'objet (6) à faire passer au voisinage de ses surfaces extérieures (48), comme élément d'écartement (28, 30, 36, 37), un dispositif d'étanchéité déformable spatialement, fermant les arêtes frontales des faces de formage (71 à 78) par rapport à la pression ambiante.

2. Installation d'extrusion selon la revendication 1, **caractérisée en ce qu'**au moins l'un des espaces creux (38 à 41) entourant l'objet (6) s'écoulant à travers ceux-ci est évacué à une dépression abaissée par rapport à la pression ambiante.

3. Installation d'extrusion selon la revendication 1 ou 2, **caractérisée en ce qu'**une partie majoritaire des faces de formage (71 à 78) d'au moins trois outils de calibrage (24, 31 à 33) disposés directement en aval de l'outil d'extrusion (8), est réalisée continuellement lisse.

4. Installation d'extrusion selon l'une ou plusieurs des revendications précédentes, **caractérisée en ce qu'**une longueur des faces de formage (71 à 78) de chaque outil de calibrage (24, 31 à 33) représente dans la direction d'extrusion - flèche (7) - un multiple, notamment sept à trente fois, par exemple vingt fois d'une distance (29) s'étendant parallèlement à la direction d'extrusion - flèche (7) - entre les lèvres de filière (27) de l'outil d'extrusion (8) et l'outil de calibrage (31) directement en aval de celui-ci respectivement d'un écart (34, 35) entre deux outils de calibrage (31 à 33) disposés directement l'un derrière l'autre dans la direction d'extrusion - flèche (7).

5. Installation d'extrusion selon l'une ou plusieurs des revendications précédentes, **caractérisée en ce que** chaque espace creux (38 à 41), dans un plan en section transversale s'étendant perpendiculairement à la direction d'extrusion respectivement les espaces creux (38 à 41) avoisinant dans ce plan les faces de formage (71 à 78) des outils de calibrage (24, 31 à 33) sont reliés à un conduit propre (42 à 45).

6. Installation d'extrusion selon l'une ou plusieurs des revendications précédentes, **caractérisée en ce que** l'outil de calibrage (24) disposé directement en aval de la lèvre de filière (27) dans la direction d'extrusion - flèche (7) - est logé d'une manière au moins axialement mobile sur l'outil de calibrage (31) faisant suite à celui-ci.

7. Installation d'extrusion selon l'une ou plusieurs des revendications précédentes, **caractérisée en ce que** le conduit (42) pour l'espace creux (38) disposé directement en aval de l'outil d'extrusion (8) est disposé au moins partiellement dans l'outil d'extrusion (8).

8. Installation d'extrusion selon l'une ou plusieurs des revendication précédentes, **caractérisée en ce que** l'espace creux (38 à 41) respectivement la fente est pourvu d'un canal transversal (95) respectivement d'une entrée pour un agent de rinçage (94) qui est relié par un conduit d'amenée (96) à un système d'alimentation disposé à l'extérieur du dispositif de formage (3).

9. Installation d'extrusion selon l'une ou plusieurs des revendications précédentes, **caractérisée en ce que** le dispositif d'étanchéité entoure continuellement les arêtes frontales des faces de formage (71 à 78).

10. Installation d'extrusion selon l'une ou plusieurs des revendications précédentes, **caractérisée en ce que** le dispositif d'étanchéité est pourvu d'une chambre creuse qui est reliée le cas échéant par un conduit sous pression (60) à un système d'alimentation en pression (61).

11. Installation d'extrusion selon l'une ou plusieurs des revendications précédentes, **caractérisée en ce qu'**une distance (82) entre les faces de formage opposées (71 à 78) des outils de calibrage (24, 31 à 33) diminue au fur et à mesure qu'augmente l'écart de l'outil de calibrage (24, 31 à 33) de l'outil d'extrusion (8).

12. Installation d'extrusion selon l'une ou plusieurs des revendications précédentes, **caractérisée en ce que** dans l'outil de calibrage (33) le plus éloigné de l'outil d'extrusion (8), dans la zone d'extrémité des faces de formage (71 à 78) située dans la direction d'extrusion - flèche (7) - des passages d'air sont ménagés qui sont reliés par un conduit d'aspiration (67) au générateur de vide (46).

13. Installation d'extrusion selon l'une ou plusieurs des revendications précédentes, **caractérisée en ce que** sont disposés dans une petite zone partielle d'une face de formage (71 à 78), qui est plus petite que 10% de la face de formage totale (71 à 78) d'un outil de calibrage (24, 31 à 33) un ou plusieurs passages d'air qui sont reliés par un conduit d'aspiration (67) au générateur de vide (46).

14. Installation d'extrusion selon l'une ou plusieurs des revendications précédentes, **caractérisée en ce que** les espaces creux (38 à 41) entre les outils de calibrage (24, 31 à 33) disposés les uns derrière les autres dans la direction d'extrusion - flèche (7) - sont reliés par des conduits d'aspiration séparés (67) à respectivement un générateur de vide (46) présentant un vide plus élevé.

15. Installation d'extrusion selon l'une ou plusieurs des revendications précédentes, **caractérisée en ce qu'**il est disposé entre les espaces creux (38 à 41) et le générateur de vide (46) un séparateur (68).

16. Installation d'extrusion selon l'une ou plusieurs des revendications précédentes, **caractérisée en ce qu'**il est disposé entre l'outil d'extrusion (8) et le premier outil de calibrage (24) disposé en aval dans la direction d'extrusion - flèche (7) - un dispositif d'étanchéité d'une mauvaise conduction de chaleur, de préférence déformable élastiquement.

17. Installation d'extrusion selon l'une ou plusieurs des revendications précédentes, **caractérisée en ce qu'**une face frontale de l'outil d'extrusion (8) et une face frontale (25) de l'outil de calibrage (24) disposé directement en aval de celui-ci sont tournées l'une vers l'autre, sont orientées perpendiculairement à la direction d'extrusion - flèche (7) - et sont espacées l'une de l'autre.

18. Installation d'extrusion selon l'une ou plusieurs des revendications précédentes, **caractérisée en ce que** l'outil de calibrage (24) disposé directement en aval de l'outil d'extrusion (8) est pourvu d'un agent tempérant (50) dont la température est inférieure à 40°C, et elle est de préférence de 20°C.

19. Installation d'extrusion selon l'une ou plusieurs des revendications précédentes, **caractérisée en ce qu'**une longueur des faces de formage (71 à 78) s'étendant dans la direction d'extrusion - flèche (7) - des différents outils de calibrage (24, 31 à 33) est différente.

20. Installation d'extrusion selon l'une ou plusieurs des revendications précédentes, **caractérisée en ce que** la longueur des faces de formage (71 à 78) des outils de calibrage (24, 31 à 33) augmente au fur et à mesure qu'augmente l'écart de l'outil de calibrage (24, 31 à 33) de l'outil d'extrusion (8).

21. Installation d'extrusion selon l'une ou plusieurs des revendications précédentes, **caractérisée en ce qu'**une longueur des faces de formage (71 à 78) de l'outil de calibrage (24) disposé directement en aval de l'outil d'extrusion (8) est plus petite que 70%, de préférence plus petite que 30% de la longueur des faces de formage (71 à 78) de l'outil de calibrage (31) disposé directement en aval de celui-ci dans la direction d'extrusion - flèche (7).

22. Installation d'extrusion selon l'une ou plusieurs des revendications précédentes, **caractérisée en ce qu'**une face en section transversale enveloppée par les faces de formage (71 à 78) de l'outil de calibrage (24) disposé directement en aval de l'outil d'extrusion (8) est plus grande dans la zone d'entrée de l'outil de calibrage (24) qu'une face en section transversale enveloppée par les arêtes frontales des faces de formage extérieures (71 à 78) de l'outil d'extrusion (8).

23. Installation d'extrusion selon l'une ou plusieurs des revendications précédentes, **caractérisée en ce que** l'outil de calibrage (24) disposé directement en aval de l'outil d'extrusion (8) est logé sur l'outil d'extrusion (31) disposé directement en aval de celui-ci dans la direction d'extrusion - flèche (7) - dans une direction s'étendant dans un plan s'étendant perpendiculairement à l'ouverture d'extrusion et est réalisé d'une manière relativement ajustable dans une direction s'étendant dans la direction d'extrusion - flèche (7).
